# EUROPEAN PATENT APPLICATION

(11) **EP 2 051 494 A1**
(43) Date of publication of application: **22.04.2009**
(21) Application number: 07768099.9
(22) Date of filing: 03.07.2007
(51) Int. Cl.: H04M 3/42, H04L 12/56, H04Q 7/36, H04Q 7/38

(54) **SETTING INFORMATION REGISTERING APPARATUS, WIRELESS COMMUNICATION SYSTEM, SETTING INFORMATION REGISTERING METHOD AND SETTING INFORMATION REGISTERING PROGRAM**

(30) Priority: 04.08.2006 JP 2006213744
(71) Applicant: NEC Corporation, Minato-ku Tokyo 108-8001 (JP)
(72) Inventor: MIZUKOSHI, Yasuhiro, Tokyo 108-8001 (JP)
(74) Representative: Betten & Resch
(86) International application number: PCT/JP2007/063329
(87) International publication number: WO 2008/015866

(57) **Abstract**

The present invention provides a setting information registration apparatus that can prevent unnecessary setting information from being generated, when setting information needed at the time of performing wireless communication is generated. A setting information registration apparatus (100) arbitrarily collects unique identification information of unspecific apparatuses, and extracts unique identification information of a specific wireless apparatus (STA) from the arbitrarily collected identification information. In addition, the setting information registration apparatus (100) generates setting information needed when a wireless apparatus performs wireless communication, on the basis of the extracted identification information, and registers the generated setting information in wireless control apparatuses (200, 201, 300, and 301).

## Description

### Technical Field

The present invention relates to a wireless communication system that is configured to include at least a wireless apparatus that performs wireless communication, a wireless control apparatus that controls the wireless communication of the wireless apparatus, and a setting information registration apparatus that registers setting information, which is needed when the wireless apparatus performs the wireless communication, in the wireless control apparatus. In particular, the present invention relates to a setting information registration apparatus, a wireless communication system, a setting information registration method, and a setting information registration program that enable setting information generated in the setting information registration apparatus to be registered in a wireless control apparatus.

### Background Art

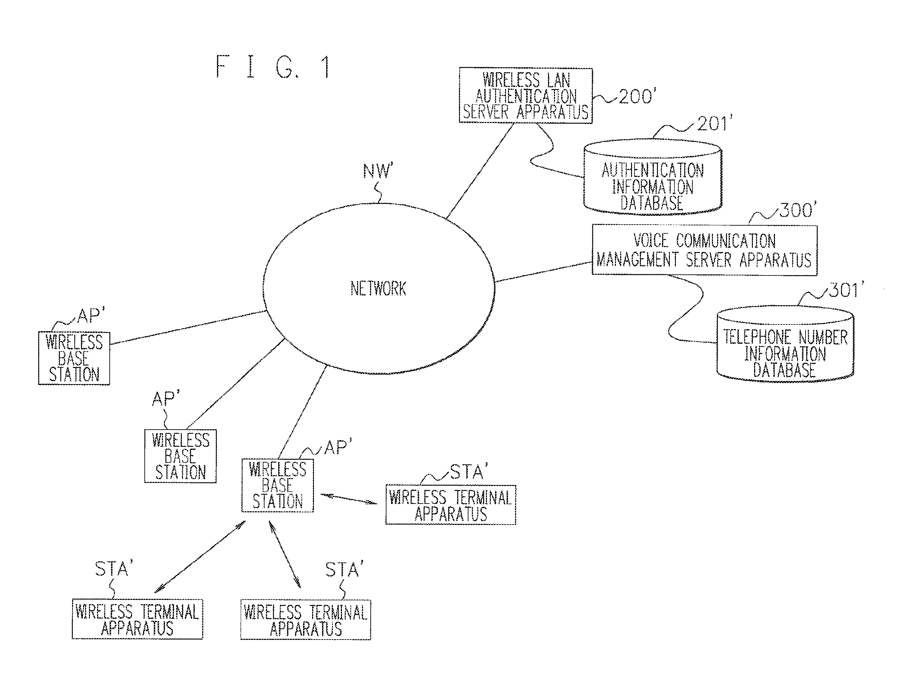

A general wireless communication system is configured to include wireless terminal apparatuses (STA'), wireless base stations (AP'), a wireless LAN authentication server apparatus (200'), an authentication information database (201'), a voice communication management server apparatus (300'), and a telephone number information database (301'), as shown in Fig. 1.

In the wireless communication system shown in Fig. 1, when the wireless terminal apparatus (STA') starts wireless communication, the wireless terminal apparatus (STA') is connected to the wireless LAN authentication server apparatus (200') through the wireless base station (AP'), transmits setting information set to the wireless terminal apparatus (STA') to the wireless LAN authentication server apparatus (200'), and performs a connection request of the wireless communication.

The wireless LAN authentication server apparatus (200') that has received the wireless communication connection request collates the setting information received from the wireless terminal apparatus (STA') and authentication information registered in the authentication information database (201'), determines whether the setting information received from the wireless terminal apparatus (STA') is registered in the authentication information database (201'), and executes an authentication process of the wireless terminal apparatus (STA').

When it is determined that the setting information received from the wireless terminal apparatus (STA') is registered in the authentication information database (201'), the wireless LAN authentication server apparatus (200') transmits an authentication permission notification to the wireless terminal apparatus (STA').

In addition, when it is determined that the authentication permission notification is received from the wireless LAN authentication server apparatus (200'), the wireless terminal apparatus (STA') fixes wireless communication connection of the wireless terminal apparatus (STA') and starts wireless communication.

Further, when the wireless terminal apparatus (STA') starts voice communication, the wireless terminal apparatus (STA') is connected to the voice communication management server apparatus (300') through the wireless base station (AP'), transmits the setting information set to the wireless terminal apparatus (STA') to the voice communication management server apparatus (300'), and performs a connection request of the voice communication.

The voice communication management server apparatus (300') that has received the voice communication connection request collates the setting information received from the wireless terminal apparatus (STA') and telephone number information registered in the telephone number information database (301'), determines whether the setting information received from the wireless terminal apparatus (STA') is registered in the telephone number information database (301'), and executes a connection process of the wireless terminal apparatus (STA').

When it is determined that the setting information received from the wireless terminal apparatus (STA') is registered in the telephone number information database (301'), the voice communication management server apparatus (300') transmits a connection permission notification to the wireless terminal apparatus (STA').

In addition, when it is determined that the connection permission notification is received from the voice communication management server apparatus (300'), the wireless terminal apparatus (STA') fixes voice communication connection of the wireless terminal apparatus (STA') and starts voice communication.

Further, in the wireless communication system shown in Fig. 1, when a large amount of wireless terminal apparatuses (STA') that perform wireless communication are introduced, the setting information that is needed when each wireless terminal apparatus (STA') performs wireless communication needs to be created by a manager for each wireless terminal apparatus (STA'), and the setting information that is created for each wireless terminal apparatus (STA') needs to be individually set to the authentication information database (201') and the telephone number information database (301').

For this reason, when a large amount of wireless terminal apparatuses (STA') that perform wireless communication are introduced, an artificial operation needs to be performed, which may increase introducing costs.

Accordingly, a system needs to be developed, in which when a large amount of wireless terminal apparatuses (STA') that perform wireless communication are introduced, the setting information needed when the wireless terminal apparatuses (STA') perform wireless communication can be automatically registered in the authentication information database (201') and the telephone number information database (301') in order to reduce introducing costs.

Further, as an example of a technical document that is applied earlier than the present invention, there is a document that discloses a wireless communication connection management server that a user can easily use without performing complicated registration work (for example, refer to Patent Document 1).

Further, there is a document that discloses a cryptography key setting system that enables security to be maintained, even though a cryptography key is used according to an initial setting state (for example, refer to Patent Document 2).

Furthermore, there is a document that discloses a convenient gate keeper apparatus that can automatically assign a telephone number of an IP telephone by simple data setting (for example, refer to Patent Document 3).
Patent Document 1: JP-A-2004-264976
Patent Document 2: JP-A-2003-110543
Patent Document 3: JP-A-2004-147101

### Disclosure of the Invention

### Problem to be solved by the Invention

However, in the Patent Documents 1 to 3, when setting information needed at the time of performing wireless communication is generated, a method that prevents unnecessary setting information from being generated is not described at all.

Accordingly, the present invention has been made to resolve the problems, and it is an object of the present invention to provide a setting information registration apparatus, a wireless communication system, a setting information registration method, and a setting information registration program that enable generation of unnecessary setting information to be prevented, when setting information needed at the time of performing wireless communication is generated.

### Means for solving the problems

In order to achieve the object, the present invention has the following characteristics.

### <Setting information registration apparatus>

A setting information registration apparatus according to the present invention is a setting information registration apparatus that registers setting information, which is needed when a wireless apparatus performs wireless communication, in a wireless control apparatus that controls wireless communication of the wireless apparatus. The setting information registration apparatus includes an identification information collecting unit that arbitrarily collects unique identification information of unspecific apparatuses; an identification information extracting unit that extracts unique identification information of a specific wireless apparatus from the identification information arbitrarily collected by the identification information collecting unit; and a setting information registering unit that generates the setting information on the basis of the identification information extracted by the identification information extracting unit, and registers the generated setting information in the wireless control apparatus.

### <Wireless communication system>

Further, a wireless communication system according to the present invention is a wireless communication system that includes a wireless apparatus; a wireless control apparatus that controls wireless communication of the wireless apparatus; and a setting information registration apparatus that registers setting information, which is needed when the wireless apparatus performs wireless communication, in the wireless control apparatus. The setting information registration apparatus includes an identification information collecting unit that arbitrarily collects unique identification information of unspecific apparatuses, an identification information extracting unit that extracts unique identification information of a specific wireless apparatus from the identification information arbitrarily collected by the identification information collecting unit, and a setting information registering unit that generates the setting information on the basis of the identification information extracted by the identification information extracting unit, and registers the generated setting information in the wireless control apparatus.

### <Setting information registration method>

Further, a setting information registration method according to the present invention is a setting information registration method that is executed by a setting information registration apparatus that registers setting information, which is needed when a wireless apparatus performs wireless communication, in a wireless control apparatus that controls wireless communication of the wireless apparatus. The setting information registration apparatus executes an identification information collecting process of arbitrarily collecting unique identification information of unspecific apparatuses; an identification information extracting process of extracting unique identification information of a specific wireless apparatus from the identification information arbitrarily collected by the identification information collecting process; and a setting information registering process of generating the setting information on the basis of the identification information extracted by the identification information extracting process and registering the generated setting information in the wireless control apparatus.

### <Setting information registration program>

Furthermore, a setting information registration program according to the present invention is a setting information registration program that is executed in a setting information registration apparatus that registers setting information, which is needed when a wireless apparatus performs wireless communication, in a wireless control apparatus that controls wireless communication of the wireless apparatus. The setting information registration program allows to be executed in the setting information registration apparatus the following processes: an identification information collecting process of arbitrarily collecting unique identification information of unspecific apparatuses; an identification information extracting process of extracting unique identification information of a specific wireless apparatus from the identification information arbitrarily collected by the identification information collecting process; and a setting information registering process of generating the setting information on the basis of the identification information extracted by the identification information extracting process and registering the generated setting information in the wireless control apparatus.

### Effect of the Invention

According to the present invention, it is possible to prevent unnecessary setting information from being generated, when setting information needed at the time of performing wireless communication is generated.

### Best Mode for carrying out the Invention

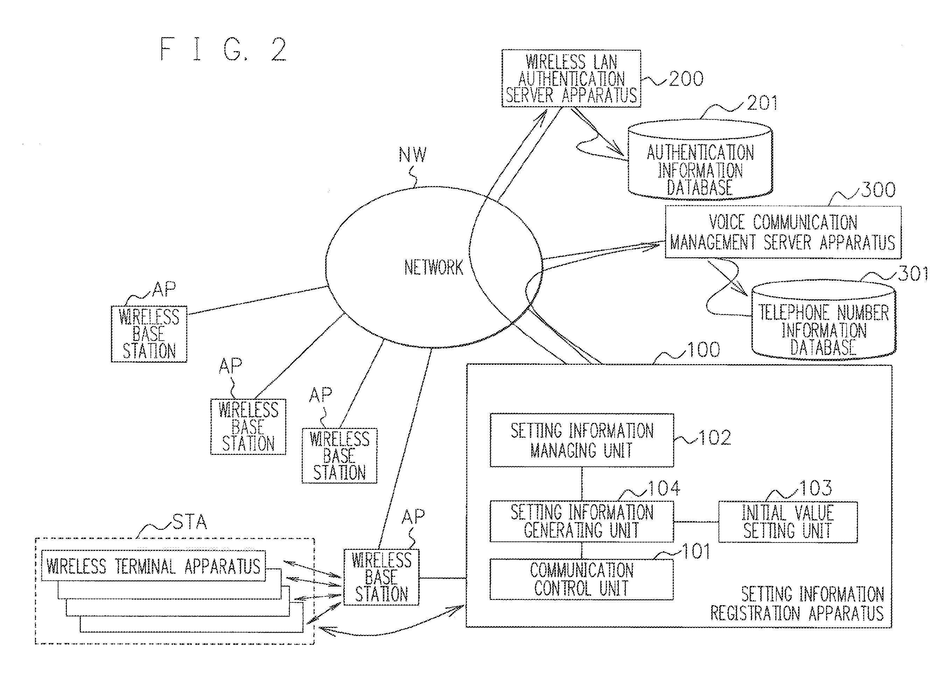

First, the outline of a wireless communication system according to an exemplary embodiment will be described with reference to Fig. 2.

As shown in Fig. 2, the wireless communication system according to this embodiment is a wireless communication system that is configured to include wireless terminal apparatuses (STA), wireless control apparatuses (corresponding to reference numerals 200, 201, 300, and 301) to control wireless communication of the wireless terminal apparatuses (STA), and a setting information registration apparatus (100) to register setting information, which is needed when the wireless terminal apparatuses (STA) perform wireless communication, in the wireless control apparatuses (200, 201, 300, and 301).

In addition, the setting information registration apparatus (100) arbitrarily collects unique identification information of an unspecific apparatus, and extracts unique identification information of the specific wireless terminal apparatus (STA) from the arbitrarily collected identification information. In addition, the setting information registration apparatus (100) generates setting information on the basis of the extracted identification information and registers the generated setting information in the wireless control apparatuses (200, 201, 300, and 301).

As a result, the setting information registration apparatus (100) can automatically register the setting information, which is needed when the wireless terminal apparatus (STA) performs wireless communication, in the wireless control apparatuses (200, 201, 300, and 301).

In addition, the setting information registration apparatus (100) extracts the unique identification information of the specific wireless terminal apparatus (STA) from the arbitrarily collected identification information, thereby preventing unnecessary setting information from being generated when generating the setting information.

Hereinafter, the wireless communication system according to this embodiment will be described in detail with reference to the accompanying drawings. In the embodiment that is described below, wireless control apparatuses that controls wireless communication of the wireless terminal apparatus (STA) are described as a wireless LAN authentication server apparatus (200), an authentication information database (201), a voice communication management server apparatus (300), and a telephone number information database (301). However, if the wireless communication of the wireless terminal apparatus (STA) can be controlled, the system configuration among the wireless LAN authentication server apparatus (200), the authentication information database (201), the voice communication management server apparatus (300), and the telephone number information database (301) is not limited to the specific system configuration, and all system configurations can be constructed.

### (First exemplary embodiment)

### <System configuration of a wireless communication system>

First, the system configuration of the wireless communication system according to this embodiment will be described with reference to Fig. 2.

The wireless communication system according to this embodiment is configured to include wireless terminal apparatuses (STA), wireless base stations (AP), a setting information registration apparatus (100), the wireless LAN authentication server apparatus (200), the authentication information database (201), the voice communication management server apparatus (300), and the telephone number information database (301).

Further, the wireless LAN authentication server apparatus (200), the authentication information database (201), the voice communication management server apparatus (300), and the telephone number information database (301) can be configured to have the same functions as those shown in Fig. 1.

### <Internal configuration of a wireless terminal apparatus: STA>

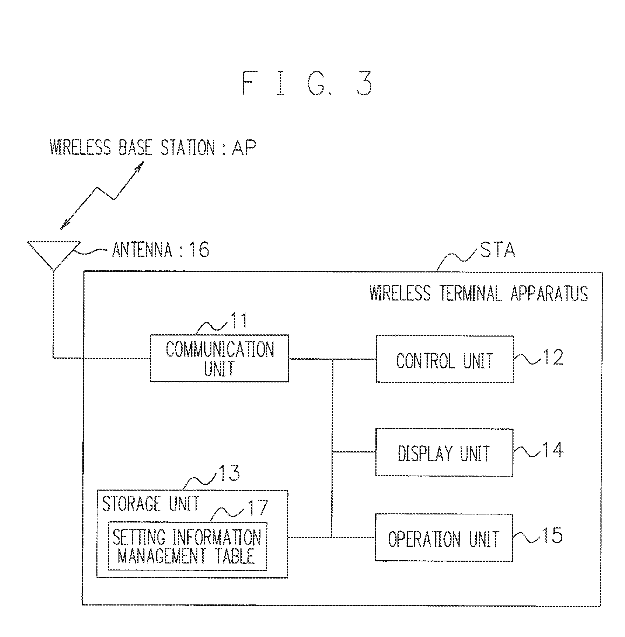

Next, the internal configuration of the wireless terminal apparatus (STA) that configures the wireless communication system according to this embodiment will be described with reference to Fig. 3.

The wireless terminal, apparatus (STA) according to this embodiment is configured to include a communication unit (11), a control unit (12), a storage unit (13), a display unit (14), an operation unit (15), and an antenna (16), as shown in Fig. 3.

The communication unit (11) fixes a radio link with the wireless base station (AP) through the antenna (16) and transmits and receives information at an arbitrary frequency.

The control unit (12) controls internal components of the wireless terminal apparatus (STA).

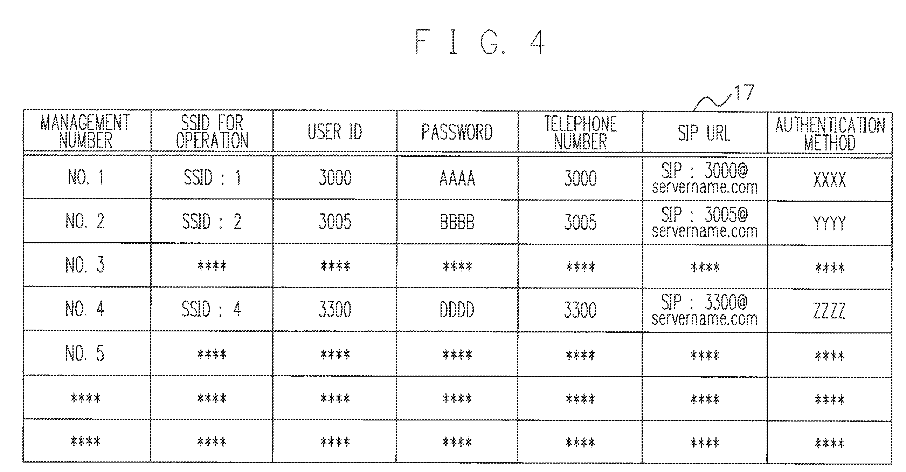

The storage unit (13) stores various setting values of the wireless terminal apparatus (STA) or temporarily accumulates information transmitted and received thorough the communication unit (11). In addition, the storage unit (13) stores a setting dedicated SSID (Service Set Identifier) that is needed for connection to the setting information registration apparatus (100) existing on a setting network. Further, the storage unit (13) is configured to include a setting information management table (17) to manage setting information that is needed when wireless communication is performed. The table configuration of the setting information management table (17) is shown in Fig. 4.

As shown in Fig. 4, the setting information that is needed when the wireless terminal apparatus (STA) performs wireless communication is registered in the setting information management table (17).

As a result, the wireless terminal apparatus (STA) can perform wireless communication using the setting information that is registered in the setting information management table (17). The setting information management table (17) according to this embodiment divisionally manages setting information for every "management number", as shown in Fig. 4.

Examples of the setting information that is registered in the setting information management table (17) according to this embodiment may include an "SSID for an operation", a "user ID", a "password", a "telephone number", an "SIP URL", and an "authentication method", as shown in Fig. 4.

The "SSID for an operation" is used when the wireless terminal apparatus (STA) is connected to the wireless LAN authentication server apparatus (200) and the voice communication management server apparatus (300) through the wireless base station (AP).

The "user ID" is used when an authentication permission notification is received from the wireless LAN authentication server apparatus (200).

The "password" is used when determining whether or not to approve wireless connection between the wireless terminal apparatus (STA) and the wireless LAN authentication server apparatus (200).

The "telephone number" is used when a connection permission notification is received from the voice communication management server apparatus (300).

The "SIP URL" is used when determining whether or not to approve connection between the wireless terminal apparatus (STA) and the voice communication management server apparatus (300).

The "authentication method" indicates the standard that is determined in the IEEE802.1x.

Further, the setting information that is registered in the setting information management table (17) shown in Fig. 4 is only exemplary, and the setting information is not limited to the setting information shown in Fig. 4. That is, if the setting information is information that can be acquired from the setting information registration apparatus (100), all information can be registered and managed in the setting information management table (17).

Further, in this embodiment, as shown in Fig. 4, the setting information is divisionally managed for every "management number". However, if the setting information can be managed, all managing methods can be applied.

Further, in the setting information management table (17), at the time of initial setting of the wireless terminal apparatus (STA), the setting information is not registered (empty state). At the time of starting to operate wireless communication, the wireless terminal apparatus (STA) is connected to the setting information registration apparatus (100) existing on a setting network using a setting dedicated SSID for connection to the setting network, acquires setting information that is generated in the setting information registration apparatus (100), and registers the acquired setting information in the setting information management table (17).

As a result, the wireless terminal apparatus (STA) can perform wireless communication using the setting information that is registered in the setting information management table (17). Further, information that is used for connection to the setting network is not limited to the setting dedicated SSID. If the corresponding information is information that can be used for connection to the setting network, all information can be applied as connection information.

However, in a state before starting an operation where there is no setting information that is registered in the wireless terminal apparatus (STA), if it is assumed that the wireless terminal apparatus (STA) is connected to the setting information registration apparatus (100), the wireless terminal apparatus (STA) is preferably designed, such that the wireless terminal apparatus (STA) can be connected to the setting network using information that is previously held by the existing wireless terminal apparatus (STA).

The display unit (14) is used to display a variety of information that is stored in the storage unit (13). For example, the information that is registered in the setting information management table (17) shown in Fig. 4 is displayed on the display unit (14).

The operation unit (15) sets a variety of setting information that is stored in the storage unit (13) or inputs command information that is needed to execute various control operations in the wireless terminal apparatus (STA). For example, the information that is registered in the setting information management table (17) shown in Fig. 4 is set by the operation unit (15).

### <Internal configuration of a wireless base station: AP>

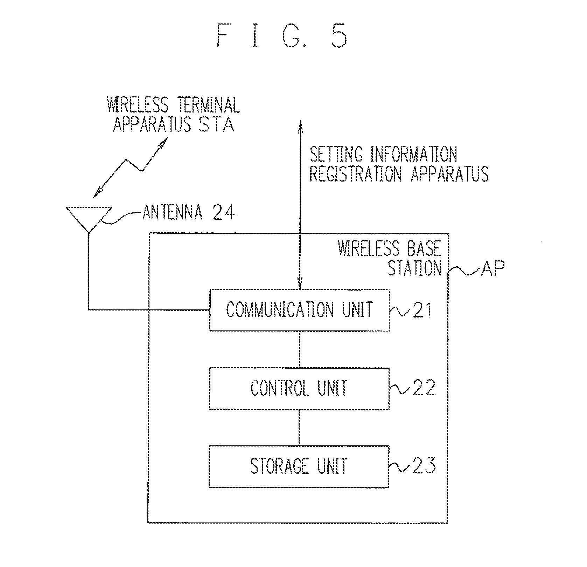

Next, the internal configuration of the wireless base station (AP) that configures the wireless communication system according to this embodiment will be described with reference to Fig. 5.

The wireless base station (AP) according to this embodiment is configured to include a communication unit (21), a control unit (22), a storage unit (23), and an antenna (24), as shown in Fig. 5.

The communication unit (21) fixes a radio link with the wireless terminal apparatus (STA) through the antenna (24), and transmits and receives information at an arbitrary frequency. Further, the communication unit (21) can exchange information with another wireless base station (AP).

The control unit (22) controls internal components of the wireless base station (AP). The storage unit (23) stores various setting values of the wireless base station (AP) or temporarily accumulates information that is transmitted and received through the communication unit (21). As the various setting values that are stored in the storage unit (23), a radio channel or a SSID (Service Set Identifier) is exemplified.

In this embodiment, examples of the SSID may include an SSID for an operation that is used when wireless communication is performed and a setting dedicated SSID that is used when setting information is registered in the wireless terminal apparatus (STA).

In the wireless base station (AP) that exists on the same setting network (subnetwork) as the setting information registration apparatus (100), the setting dedicated SSID is stored in the storage unit (23). As a result, when the wireless terminal apparatus (STA) is connected to the wireless base station (AP) using the setting dedicated SSID, the wireless base station (AP) transmits information to the setting information registration apparatus (100) that exists on the same setting network, thereby automatically fixing a link between the wireless terminal apparatus (STA) and the setting information registration apparatus (100).

Further, in the wireless communication system according to this embodiment, since the setting dedicated wireless base station (AP) is provided, the wireless terminal apparatus (STA) that exists within an electric wave reaching range of the setting dedicated wireless base station (AP) can use the setting dedicated SSID to return to the setting dedicated wireless base station (AP), and can be automatically connected to the setting information registration apparatus (100) that exists on the setting network.

### <Internal configuration of a setting information registration apparatus: 100>

Next, the internal configuration of the setting information registration apparatus (100) that configures the wireless communication apparatus according to this embodiment will be described with reference to Fig. 2.

As shown in Fig. 2, the setting information registration apparatus (100) according to this embodiment can be configured to include a communication control unit (101), a setting information managing unit (102), an initial value setting unit (103), and a setting information generating unit (104).

The communication control unit (101) performs wireless communication with the wireless base station (AP) that exists on the same setting network (subnetwork). Further, the setting information registration apparatus (100) according to this embodiment has the setting dedicated SSID set thereto and can perform wireless communication with only the wireless base station (AP) where the setting dedicated SSID is set.

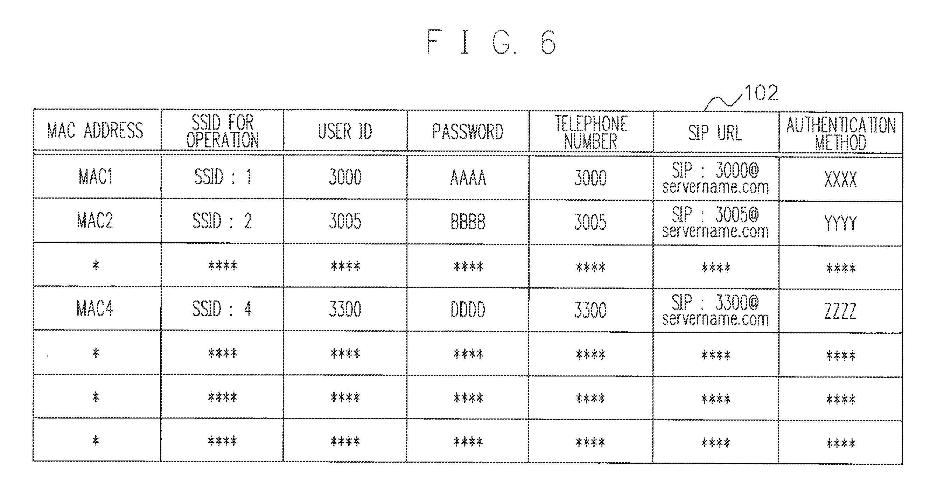

The setting information managing unit (102) manages setting information that is needed when the wireless terminal apparatus (STA) performs wireless communication. Further, an example of the configuration of the setting information that is managed by the setting information managing unit (102) is shown in Fig. 6.

The setting information managing unit (102) according to this embodiment manages the setting information by associating the setting information with a unique "MAC address" of the wireless terminal apparatus (STA), as shown in Fig. 6. Examples of the setting information may include an "SSID for an operation", a "user ID", a "password", a "telephone number", an "SIP URL", and an "authentication method", similar to the setting information that is registered in the setting information management table (17) of the wireless terminal apparatus (STA) that is shown in Fig. 4.

Further, in the wireless communication system according to this embodiment, the same information as information that is included in the setting information managed by the setting information managing unit (102) is registered in the authentication information database (201) and the telephone number information database (301).

In addition, the setting information managing unit (102) manages "extraction conditions" used to specify identification information of the wireless terminal apparatus (STA) that generates the setting information in the setting information registration apparatus (100).

Examples of the "extraction conditions" may include "information related to a unique MAC address" of the wireless terminal apparatus (STA) or "information related to a unique serial number" of the wireless terminal apparatus (STA). Further, as the "extraction conditions", all conditions can be managed as the "extraction conditions" as long as it is possible to specify unique identification information of the wireless terminal apparatus (STA) that generates the setting information in the setting information registration apparatus (100).

Further, setting of the "extraction conditions" that are managed by the setting information managing unit (102) may be arbitrary changed. For example, a user can use an operation unit of the setting information registration apparatus (100) to arbitrarily change the setting of the "extraction conditions" that are managed by the setting information managing unit (102). Alternatively, the user can download "extraction conditions" that are stored in an external communication apparatus connected to the setting information registration apparatus (100) and acquire the "extraction conditions", and change the "extraction conditions" that are managed by the setting information managing unit (102), on the basis of the acquired "extraction conditions".

Further, when the external communication apparatus is used as a communication apparatus of a manufacture maker that manufactures the wireless terminal apparatus (STA), information that is related to the wireless terminal apparatus (STA) manufactured by the manufacture maker is stored in the communication apparatus as the "extraction conditions". Then, the setting information registration apparatus (100) can acquire the "extraction conditions" that are stored in the communication apparatus of the manufacture maker, and extract unique identification information of the specific wireless terminal apparatus (STA) that is manufactured by the manufacture maker, on the basis of the acquired "extraction conditions".

In the initial value setting unit (103), set are previously initial values that are used when unique setting information of the wireless terminal apparatus (STA) is generated are previously set. In this embodiment, "telephone numbers" are set as the initial values. For example, in this embodiment, "telephone numbers" of 3000 to 3999 that correspond to 1000 wireless terminal apparatuses (STA) are set as the initial values.

The setting information generating unit (104) generates unique setting information of the wireless terminal apparatus (STA). The setting information generating unit (104) determines whether the unique identification information of the wireless terminal apparatus (STA) acquired from the wireless terminal apparatus (STA) corresponds to the "extraction conditions" managed by the setting information managing unit (102). In this case, when it is determined that the unique identification information of the wireless terminal apparatus (STA) acquired from the wireless terminal apparatus (STA) corresponds to the "extraction conditions", the unique setting information of the wireless terminal apparatus (STA) is generated using the unique identification information (an MAC address or a serial number) of the wireless terminal apparatus (STA) that is acquired from the wireless terminal apparatus (STA) and the initial value (telephone number) that is set in the initial value setting unit (103).

Four example, as the "extraction conditions" used to specify the wireless terminal apparatus (STA) that generates the setting information, "information related to a unique MAC address" of the wireless terminal apparatus (STA) is managed by the setting information managing unit (102). In addition, when it is determined that the unique MAC address of the wireless terminal apparatus (STA) acquired from the wireless terminal apparatus (STA) corresponds to the "information related to the MAC address" managed by the setting information managing unit (102), the setting information generating unit (104) generates unique setting information of the wireless terminal apparatus (STA).

### <Setting information generation method>

Next, an example of when the setting information generating unit (104) generates unique setting information of the wireless terminal apparatus (STA) is described below.

First, when it is determined that "unique identification information": X (a MAC address and a serial number) of the wireless terminal apparatus (STA) acquired from the wireless terminal apparatus (STA) corresponds to the "extraction conditions", the setting information generating unit (104) selects an arbitrary "telephone number": 3000 from the telephone numbers from the initial value setting unit (103). The setting information generating unit (104) generates unique setting information of the wireless terminal apparatus (STA), on the basis of the selected arbitrary "telephone number": 3000 and the "unique identification information": X (the MAC address and the serial number) of the wireless terminal apparatus (STA) acquired from the wireless terminal apparatus (STA).

Further, examples of the unique setting information of the wireless terminal apparatus (STA) may include an "SSID for an operation": SSID: 1, a. "user ID": 3000, a "password" xxxxxxxx (random), a "telephone number": 3000, an "SIP URL": SIP:3000@servername.com, and an "authentication method".

Next, the setting information generating unit (104) associates the generated unique setting information of the wireless terminal apparatus (STA) with the unique identification information (the MAC address and the serial number) of the wireless terminal apparatus (STA) and registers the association result in the setting information managing unit (102). The setting information managing unit (102) manages the unique setting information of the wireless terminal apparatus (STA) in accordance with the table configuration shown in Fig. 6.

Next, the initial value setting unit (103) manages information of the "telephone number": 3000 that the setting information generating unit (104) arbitrarily selects from the initial value setting unit (103).

In addition, when it is determined that unique "identification information": X (a MAC address and a serial number) of a new wireless terminal apparatus (STA) acquired from the wireless terminal apparatus (STA) corresponds to the "extraction conditions", the setting information generating unit (104) selects a "telephone number": 3001 other than the telephone number that is previously selected from the initial value setting unit (103). Then, the setting information generating unit (104) generates unique setting information of the wireless terminal apparatus (STA), on the basis of the selected "telephone number": 3001 and the unique "identification information": X (the MAC address and the serial number) of the new wireless terminal apparatus (STA) acquired from the wireless terminal apparatus (STA).

As a result, the setting information generating unit (104) performs a control operation such that the same telephone number is not selected from the initial value setting unit (103), thereby generating the unique setting information of the wireless terminal apparatus (STA).

Further, a control operation can be performed such that information of the telephone number that is arbitrarily selected from the initial value setting unit (103) is deleted by the operation unit of the setting information registration apparatus (100). For example, when the setting information that is generated on the basis of the telephone number arbitrarily selected from the initial value setting unit (103) is unnecessary, a control operation can be performed such that the information of the telephone number used when the setting information is generated is deleted. As a result, the telephone numbers that are set in the initial value setting unit (103) can be effectively used.

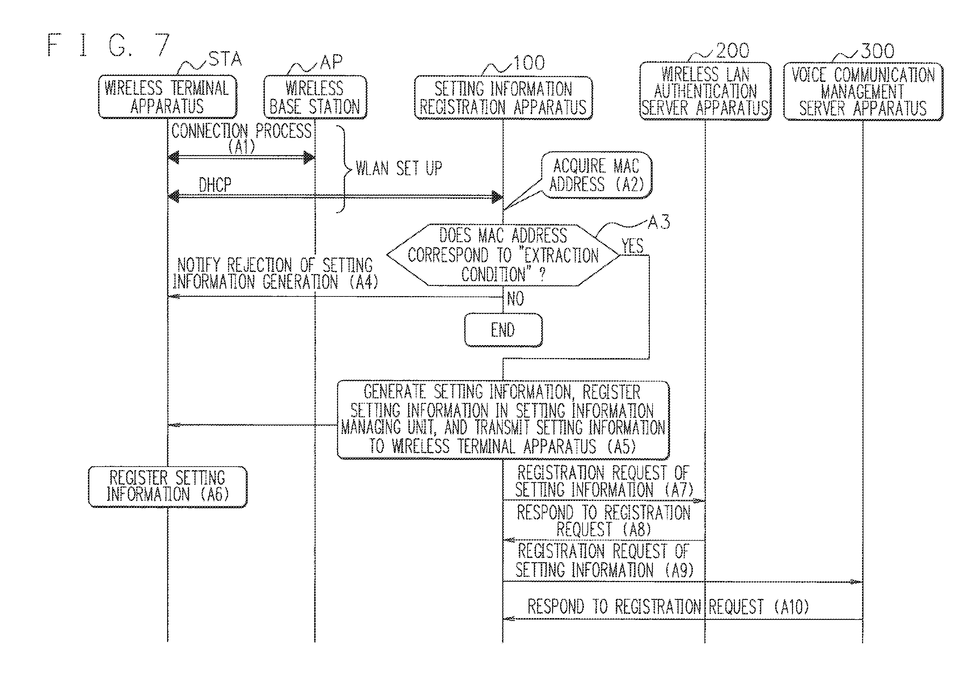

<A series of control operations in a wireless communication system>
Next, a series of control operations in a wireless communication system according to this embodiment will be described with reference to Fig. 7.

First, the wireless terminal apparatus (STA) uses the setting dedicated SSID to execute a Set-Up process, and executes a connection process to the wireless base station (AP) where the setting dedicated SSID is set (Step A1).

If the wireless terminal apparatus (STA) uses the setting dedicated SSID to complete a connection process to the wireless base station (AP), the wireless terminal apparatus (STA) transmits a DHCP request to the wireless base station (AP) using a broadcasting method (DHCP discover). Further, if the wireless base station (AP) receives the DHCP request from the wireless terminal apparatus (STA), the wireless base station (AP) transmits the DHCP request to the same subnetwork as the wireless base station (AP), and the setting information registration apparatus (100) that exists on the same subnetwork as the wireless base station (AP) receives the DHCP request from the wireless terminal apparatus (STA).

Further, if receiving the DHCP request from the wireless terminal apparatus (STA), the setting information registration apparatus (100) acquires an MAC address of the wireless terminal apparatus (STA) (Step A2).

Next, the setting information registration apparatus (100) determines whether the "MAC address" acquired from the wireless terminal apparatus (STA) corresponds to the "extraction condition" used to generate the unique setting information of the wireless terminal apparatus (STA), on the basis of the "extraction conditions" that are managed in the setting information managing unit (102) (Step A3).

When it is determined that the "MAC address" acquired from the wireless terminal apparatus (STA) does not correspond to the "extraction condition" (Step A3/No), the setting information registration apparatus (100) does not generate the unique setting information of the wireless terminal apparatus (STA), and transmits a rejection notification of setting information generation to the wireless terminal apparatus (STA) (Step A4).

As a result, the wireless terminal apparatus (STA) can determine that the "MAC address" transmitted to the setting information registration apparatus (100) does not correspond to the "extraction condition".

Further, when it is determined that the "MAC address" acquired from the wireless terminal apparatus (STA) corresponds to the "extraction condition" (Step A3/Yes), the setting information registration apparatus (100) generates the unique setting information of the wireless terminal apparatus (STA) on the basis of the "MAC address" acquired from the wireless terminal apparatus (STA) and the "telephone number" set in the initial value setting unit (103). In addition, the setting information registration apparatus (100) registers the generated unique setting information of the wireless terminal apparatus (STA) in the setting information managing unit (102). The setting information registration apparatus (100) transmits the generated unique setting information of the wireless terminal apparatus (STA) to the wireless terminal apparatus (STA) (Step A5).

The wireless terminal apparatus (STA) receives the setting information from the setting information registration apparatus (100) and registers the received setting information in the setting information management table (17) (Step A6). As a result, the wireless terminal apparatus (STA) can perform wireless communication using the unique setting information of the wireless terminal apparatus (STA) received from the setting information registration apparatus (100).

In addition, the setting information registration apparatus (100) transmits the generated unique setting information of the wireless terminal apparatus (STA) to the wireless LAN authentication server apparatus (200), and requests to register the setting information (Step A7). The wireless LAN authentication server apparatus (200) registers authentication information needed at the time of a wireless communication connection process in the authentication information database (201), on the basis of the setting information received from the setting information registration apparatus (100), and responds to the registration request of the setting information (Step A8).

For example, the wireless LAN authentication server apparatus (200) registers an "SSID for an operation", a "user ID", a "password", and an "authentication method" as authentication information in the authentication information database (201), on the basis of the setting information received from the setting information registration apparatus (100). As a result, the wireless LAN authentication server apparatus (200) can manage the authentication information needed at the time of the wireless communication connection process by using the authentication information database (201).

Further, the setting information registration apparatus (100) transmits the generated unique setting information of the wireless terminal apparatus (STA) to the voice communication management server apparatus (300), and requests to register the setting information (Step A9). The voice communication management server apparatus (300) registers telephone number information needed at the time of a voice communication connection process in the telephone number information database (301), on the basis of the setting information received from the setting information registration apparatus (100), and responds to the registration request of the setting information (Step A10).

For example, the voice communication management server apparatus (300) registers the "telephone number" and the "SIP URL" as the telephone number information in the telephone number information database (301), on the basis of the setting information received from the setting information registration apparatus (100). As a result, the voice communication management server apparatus (300) can manage the telephone number information needed at the time of the voice communication connection process by using the telephone number information database (301).

As such, the wireless terminal apparatus (STA) can use a setting dedicated SSID (Service Set Identifier) for connection to the setting network to return to the wireless base station (AP), and can be connected to the setting information registration apparatus (100) that exists on the setting network through the wireless base station (AP).

In addition, the setting information registration apparatus (100) determines whether the unique MAC address of the wireless terminal apparatus (STA), which is acquired from the wireless terminal apparatus (STA) when the setting information registration apparatus (100) is connected to the wireless terminal apparatus corresponds to the extraction condition. When it is determined that the unique MAC address of the wireless terminal apparatus (STA) acquired from the wireless terminal apparatus (STA) corresponds to the extraction condition, the setting information registration apparatus (100) generates the unique setting information of the wireless terminal apparatus (STA), transmits the generated setting information to the wireless terminal apparatus (STA), and registers the setting information in the wireless terminal apparatus (STA).

In addition, the setting information registration apparatus (100) transmits the generated unique setting information of the wireless terminal apparatus (STA) to the wireless LAN authentication server apparatus (200) and the voice communication management server apparatus (300), and registers the setting information in the authentication information database (201) and the telephone number information database (301).

As a result, the wireless terminal apparatus (STA) can perform wireless communication using the unique setting information of the wireless terminal apparatus (STA) that is acquired from the setting information registration apparatus (100).

### (Second exemplary embodiment)

Next, a second exemplary embodiment will be described.

In the wireless communication system according to the first exemplary embodiment, the setting information registration apparatus (100) generates the unique setting information of the wireless terminal apparatus (STA), on the basis of the MAC address acquired from the wireless terminal apparatus (STA).

In a wireless communication system according to the second exemplary embodiment, a setting information registration apparatus (100) generates unique setting information of the wireless terminal apparatus (STA), on the basis of a serial number acquired from the wireless terminal apparatus (STA).

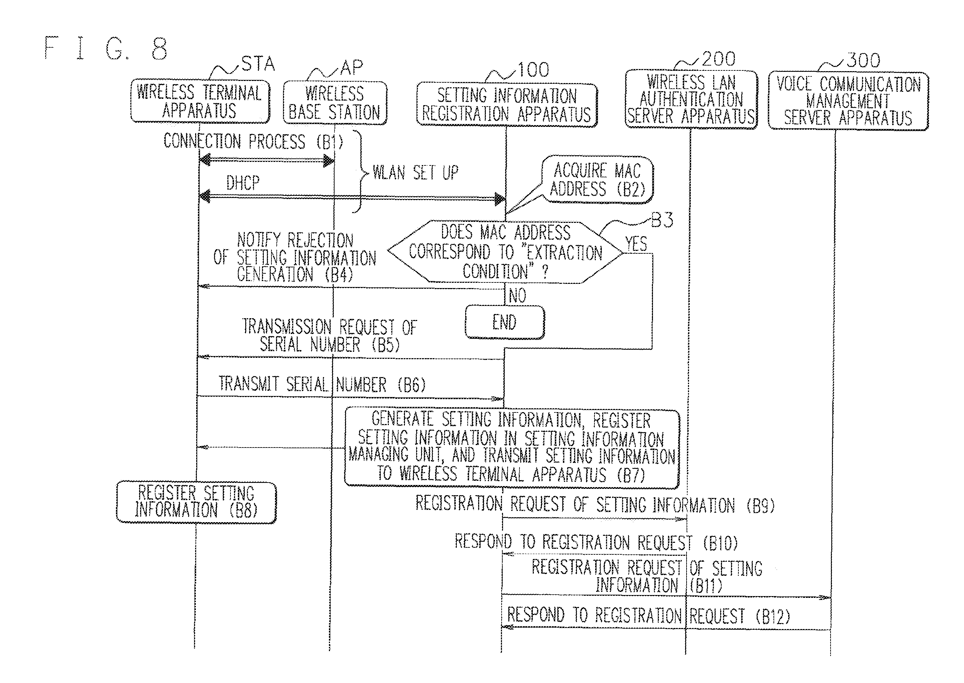

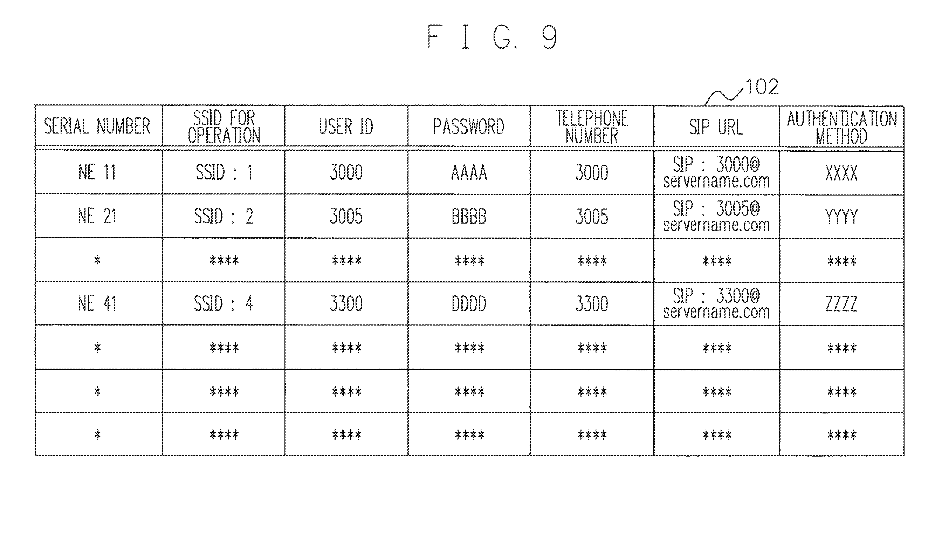

As a result, similar to the setting information registration apparatus according to the first exemplary embodiment, the setting information registration apparatus (100) can generate the unique setting information of the wireless terminal apparatus (STA). Hereinafter, a series of control operations in the wireless communication system according to the second exemplary embodiment will be described with reference to FIGS. 8 and 9. Fig. 8 shows a series of control operations in a wireless communication system according to a second exemplary embodiment, and Fig. 9 shows the table configuration of when setting information is managed in a setting information managing unit (102) of a setting information registration apparatus (100).

### <System configuration of a wireless communication system>

The wireless communication system according to the second exemplary embodiment is configured similar to the wireless communication system according to the first exemplary embodiment shown in Fig. 2.

<A series of control operations in a wireless communication system>
Next, a series of control operations in the wireless communication system according to this embodiment will be described with reference to Fig. 8.

First, the wireless terminal apparatus (STA) uses a setting dedicated SSID to execute a Set-Up process, and executes a connection process to the wireless base station (AP) where the setting dedicated SSID is set (Step B1).

If the wireless terminal apparatus (STA) uses the setting dedicated SSID to complete a connection process to the wireless base station (AP), the wireless terminal apparatus (STA) transmits a DHCP request to the wireless base station (AP) using a broadcasting method (DHCP discover). Further, if the wireless base station (AP) receives the DHCP request from the wireless terminal apparatus (STA), the wireless base station (AP) transmits the DHCP request to the same subnetwork as the wireless base station (AP), and the setting information registration apparatus (100) that exists on the same subnetwork as the wireless base station (AP) receives the DHCP request from the wireless terminal apparatus (STA).

Further, if receiving the DHCP request from the wireless terminal apparatus (STA), the setting information registration apparatus (100) acquires an MAC address of the wireless terminal apparatus (STA) (Step B2).

Next, the setting information registration apparatus (100) determines whether the "MAC address" acquired from the wireless terminal apparatus (STA) corresponds to the "extraction condition" used to generate the unique setting information of the wireless terminal apparatus (STA), on the basis of the "extraction conditions" that are managed in the setting information managing unit (102) (Step B3).

When it is determined that the "MAC address" acquired from the wireless terminal apparatus (STA) does not correspond to the "extraction condition" (Step B3/No), the setting information registration apparatus (100) does not generate the unique setting information of the wireless terminal apparatus (STA), and transmits a rejection notification of setting information generation to the wireless terminal apparatus (STA) (Step B4).

As a result, the wireless terminal apparatus (STA) can determine that the "MAC address" transmitted to the setting information registration apparatus (100) does not correspond to the "extraction condition".

Further, when it is determined that the "MAC address" acquired from the wireless terminal apparatus (STA) corresponds to the "extraction condition" (Step B3/Yes), the setting information registration apparatus (100) transmits a transmission request of a unique serial number of the wireless terminal apparatus (STA) to the wireless terminal apparatus (STA), on the basis of the "MAC address" acquired from the wireless terminal apparatus (STA) (Step B5).

When it is determined that the transmission request of the serial number is received from the setting information registration apparatus (100), the wireless terminal apparatus (STA) transmits the unique serial number of the wireless terminal apparatus (STA) to the setting information registration apparatus (100) (Step B6).

When it is determined that the serial number is received from the wireless terminal apparatus (STA), the setting information registration apparatus (100) generates unique setting information of the wireless terminal apparatus (STA), on the basis of the "serial number" received from the wireless terminal apparatus (STA) and the "telephone number" set in the initial value setting unit (103).

In addition, the setting information registration apparatus (100) registers the generated unique setting information of the wireless terminal apparatus (STA) in the setting information managing unit (102). The setting information registration apparatus (100) transmits the generated unique setting information of the wireless terminal apparatus (STA) to the wireless terminal apparatus (STA) (Step B7).

Further, the setting information managing unit (102) according to the second exemplary embodiment manages the setting information by associating the setting information with the unique "serial number" of the wireless terminal apparatus (STA), as shown in Fig. 9. Examples of the setting information may include an "SSID for an operation", a "user ID", a "password", a "telephony number", an "SIP URL", and an "authentication method", similar to the setting information that is registered in the setting information management table (17) of the wireless terminal apparatus (STA) that is shown in Fig. 4.

The wireless terminal apparatus (STA) receives the setting information from the setting information registration apparatus (100) and registers the received setting information in the setting information management table (17) (Step B8).

As a result, the wireless terminal apparatus (STA) can perform wireless communication using the unique setting information of the wireless terminal apparatus (STA) received from the setting information registration apparatus (100).

Further, the setting information registration apparatus (100) transmits the generated unique setting information of the wireless terminal apparatus (STA) to the wireless LAN authentication server apparatus (200), and requests to register the setting information (Step B9). The wireless LAN authentication server apparatus (200) registers authentication information needed at the time of a wireless communication connection process in the authentication information database (201), on the basis of the setting information received from the setting information registration apparatus (100), and responds to the registration request of the setting information (Step B10).

As a result, the wireless LAN authentication server apparatus (200) can manage the authentication information needed at the time of the wireless communication connection process by using the authentication information database (201).

Further, the setting information registration apparatus (100) transmits the generated unique setting information of the wireless terminal apparatus (STA) to the voice communication management server apparatus (300), and requests to register the setting information (Step B11). The voice communication management server apparatus (300) registers telephone number information needed at the time of a voice communication connection process in the telephone number information database (301), on the basis of the setting information received from the setting information registration apparatus (100), and responds to the registration request of the setting information (Step B12).

As a result, the voice communication management server apparatus (300) can manage the telephone number information needed at the time of the voice communication connection process by using the telephone number information database (301).

As such, the wireless terminal apparatus (STA) can use a setting dedicated SSID (Service Set Identifier) for connection to the setting network to return to the wireless base station (AP), and can be connected to the setting information registration apparatus (100) that exists on the setting network through the wireless base station (AP).

In addition, the setting information registration apparatus (100) determines whether the unique MAC address of the wireless terminal apparatus (STA), which is acquired from the wireless terminal apparatus (STA) when the setting information registration apparatus (100) is connected to the wireless terminal apparatus (STA), corresponds to the extraction condition. When it is determined that the unique MAC address of the wireless terminal apparatus (STA) acquired from the wireless terminal apparatus (STA) corresponds to the extraction condition, the setting information registration apparatus (100) transmits a transmission request of a unique serial number of the wireless terminal apparatus (STA) to the wireless terminal apparatus (STA).

In addition, the wireless terminal apparatus (STA) transmits the unique serial number of the wireless terminal apparatus (STA) to the setting information registration apparatus (100). On the basis of the unique serial number of the wireless terminal apparatus (STA) that is received from the wireless terminal apparatus (STA), the setting information registration apparatus (100) generates unique setting information of the wireless terminal apparatus (STA), transmits the generated setting information to the wireless terminal apparatus (STA), and registers the setting information in the wireless terminal apparatus (STA).

Further, the setting information registration apparatus (100) transmits the generated unique setting information of the wireless terminal apparatus (STA) to the wireless LAN authentication server apparatus (200) and the voice communication management server apparatus (300), and registers the setting information in the authentication information database (201) and the telephone number information database (301).

As a result, the wireless terminal apparatus (STA) can perform wireless communication using the unique setting information of the wireless terminal apparatus (STA) that is acquired from the setting information registration apparatus (100).

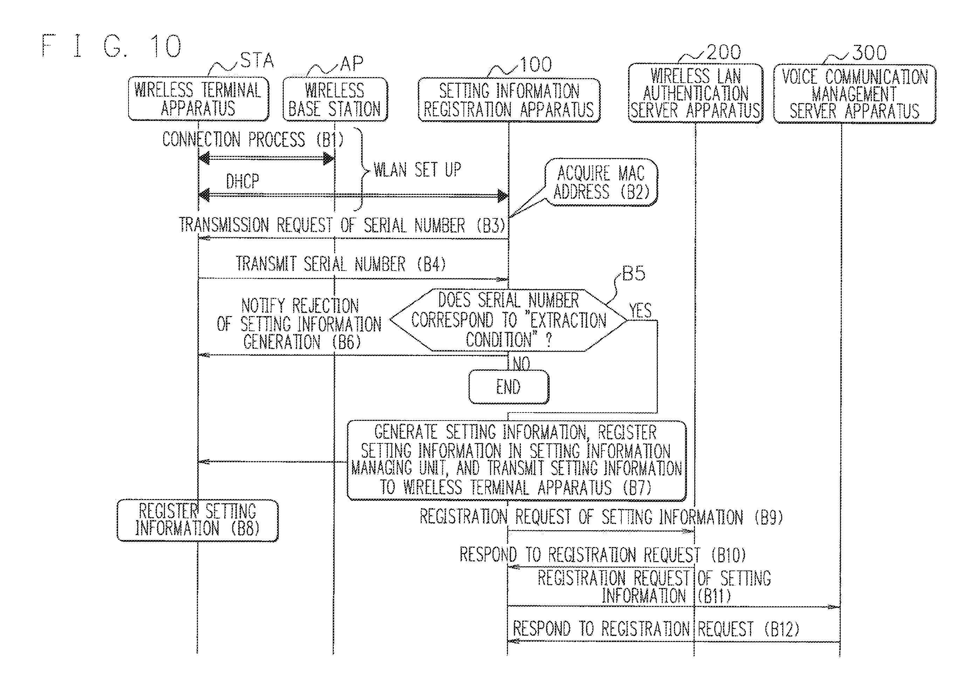

Further, in the series of control operations shown in Fig. 8, in Step B3, it is determined whether the unique MAC address of the wireless terminal apparatus (STA) acquired from the wireless terminal apparatus (STA) corresponds to the extraction condition. However, as shown in Fig. 10, in Step B5, it is determined whether the unique serial number of the wireless terminal apparatus (STA) acquired from the wireless terminal apparatus (STA) corresponds to the extraction condition.

### (Determination conditions for connection to a setting information registration apparatus (100) using a setting dedicated SSID)

Next, determination conditions that are used when performing the series of control operations according to the first and second exemplary embodiments shown in FIGS. 7, 8, and 10 will be described.

### (First determination condition)

First, as a determination condition that is used when performing the control operations according to the first and second exemplary embodiments, the case where the wireless terminal apparatus (STA) determines that the setting information is not registered in the setting information management table (17) of the wireless terminal apparatus (STA) is exemplified.

Since the setting information management table (17) of the wireless terminal apparatus (STA) is in an empty state before starting to operate wireless communication, it is not possible to perform the wireless communication. For this reason, when it is determined that the setting information is not registered in the setting information management table (17), the wireless terminal apparatus (STA) is connected to the setting information registration apparatus (100) through the wireless base station (AP) using the setting dedicated SSID, and performs the series of control operations shown in FIGS. 7, 8, and 10.

### (Second determination condition)

Further, as a determination condition that is used when performing the control operations according to the first and second exemplary embodiments, the case where the wireless terminal apparatus (STA) determines that the setting information is not registered in a predetermined area of the setting information management table (17) of the wireless terminal apparatus (STA) is exemplified.

For example, the setting information management table (17) divisionally manages setting information for every "management number", as shown in Fig. 4. For this reason, if an operator uses the operation unit (15) to select an available (non-registered) "management number" where setting information is not registered, the wireless terminal apparatus (STA) determines that setting information that is associated with the management number" selected by using the operation unit (15) is not registered in the setting information management table (17). The wireless terminal apparatus (STA) is connected to the setting information registration apparatus (100) through the wireless base station (AP) using a setting dedicated SSID, and performs the series of control operations shown in FIGS. 7, 8, and 10.

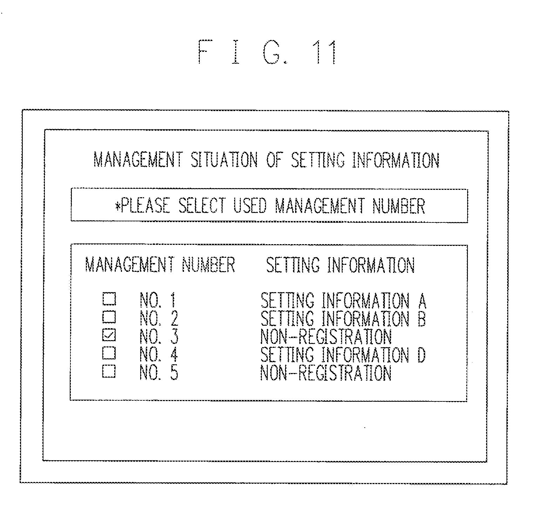

Further, when the operator uses the operation unit (15) to select the "management number", a display screen shown in Fig. 11 is displayed on a display unit (14). The display screen shown in Fig. 11 indicates a state where a management situation of setting information managed by the setting information management table (17) is divisionally managed for every "management number" and displayed on the display unit (14). The operator uses the operation unit (15) to select the "management number" of the setting information that is used when wireless communication is performed.

At this time, the operator uses the operation unit (15) to select an available (non-registered) 'management number' where setting information is not registered (management number 'NO.3'), as shown in Fig. 11. The wireless terminal apparatus (STA) determines that the setting information that is associated with the 'management number' selected by using the operation unit (15) is not registered in the setting information management table (17).

### (Third determination condition)

Further, as a determination condition that is used when performing the control operations according to the first and second exemplary embodiments, the case where the wireless terminal apparatus (STA) determines that the wireless communication cannot be fixed even though wireless communication is performed using setting information managed by the setting information management table (17) is exemplified.

For example, when a plurality of setting information is registered in the setting information management table (17), she wireless terminal apparatus (STA) sequentially reads out the setting information that is registered in the setting information management table (17), and performs wireless communication using the read setting information. At this time, when it is determined that the wireless communication cannot be fixed even though the wireless terminal apparatus (STA) uses all of the setting information registered in the setting information management table (17), the wireless terminal apparatus (STA) uses a setting dedicated SSID to be connected to the setting information registration apparatus (100) through the wireless base station (AP), and performs the series of control operations that are shown in FIGS. 7, 8, and 10.

Further, in the case where the operator can use the operation unit (15) to select a "management number" of setting information used when wireless communication is performed, when the wireless terminal apparatus (STA) determines that wireless communication cannot be fixed even through the wireless terminal apparatus (STA) performs the wireless communication using the setting information of the 'management number' selected by using the operation unit (15), the wireless terminal apparatus (STA) can perform the series of control operations that are shown in FIGS. 7, 8, and 10.

### (Fourth determination condition)

Further, as a determination condition that is used when performing the control operations according to the first and second exemplary embodiments, the case where the wireless terminal apparatus (STA) determines that an available period of the setting information that is managed by the setting information management table (17) of the wireless terminal apparatus (STA) has passed is exemplified.

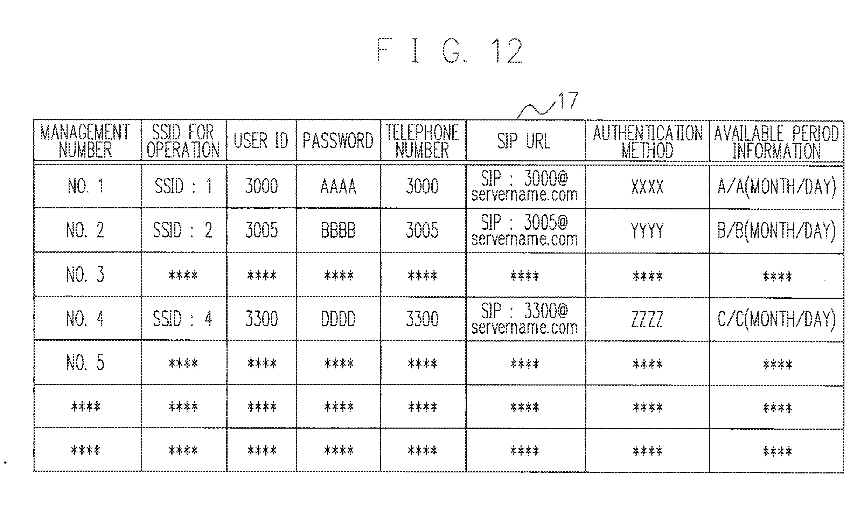

For example, as shown in Fig. 12, the setting information is associated with "available period information" that becomes the available period of the setting information and managed by the setting information management table (17). When it is determined that the available period of the setting information has passed on the basis of the "available period information" managed by the setting information management table (17), the wireless terminal apparatus (STA) uses a setting dedicated SSID to be connected to the setting information registration apparatus (100) through the wireless base station (AP), and performs the series of control operations that are shown in FIGS. 7, 8, and 10.

### (Fifth determination condition)

Further, as a determination condition that is used when performing the control operations according to the first and second exemplary embodiments, the case where it is determined that acquisition request control of the setting information has been performed is exemplified.

For example, when the wireless terminal apparatus (STA) determines that the operator uses the operation unit (15) to perform the acquisition request control of the setting information, the wireless terminal apparatus (STA) uses the setting dedicated SSID to be connected to the setting information registration apparatus (100) through the wireless base station (AP), and performs the series of control operations that are shown in FIGS. 7, 8, and 10.

At the time of starting the operation of the wireless communication (at the time of the initial setting), setting information is not registered in the setting information management table (17), and thus the wireless communication cannot be performed. For this reason, when power is supplied to the wireless terminal apparatus (STA), a display screen that urges to determine whether or not to perform the acquisition request control of the setting information is displayed on the display unit (14). When it is determined that the predetermined acquisition request control has been performed from the operation unit (15), the wireless terminal apparatus (STA) can perform the series of control operations that are shown in FIGS. 7, 8, and 10.

Further, timing at which the display screen for urging to determine whether or not to perform the acquisition request control of the setting information is displayed on the display unit (14) and the control operation is performed such that the predetermined acquisition request control is performed from the operation unit (15) may be when it is determined that the setting information is not registered in the setting information management table (17), which is described in the first determination condition, when it is determined that the setting information is not registered in the predetermined area of the setting information management table (17), which is described in the second determination condition, when it is determined that wireless communication cannot be fixed even though the wireless communication is performed using the setting information managed by the setting information management table (17), which is described in the third determination condition, and when it is determined that the available period of the setting information has passed, which is described in the fourth determination condition.

Further, the determination condition of when it is determined that the acquisition request control of the setting information has been performed is not limited to the case where it is determined that the predetermined acquisition request control has been performed from the operation unit (15). It can be determined that the acquisition request control of the setting information has been performed using various conditions as triggers.

### (Third exemplary embodiment)

Next, the third exemplary embodiment will be described.

In the first and second exemplary embodiments, the setting information registration apparatus (100) acquires the unique identification information (the MAC address or the serial number) of the wireless terminal apparatus (STA) through the wireless base station (AP).

In the third exemplary embodiment, the setting information registration apparatus (100) can obtain the unique identification information of the wireless terminal apparatus (STA) using the identification information acquisition apparatus (400), such as a barcode reader, a QR code reader, an OCR (Optical Character Recognition), an OMR (Optical Mark Recognition), and an RFID reader.

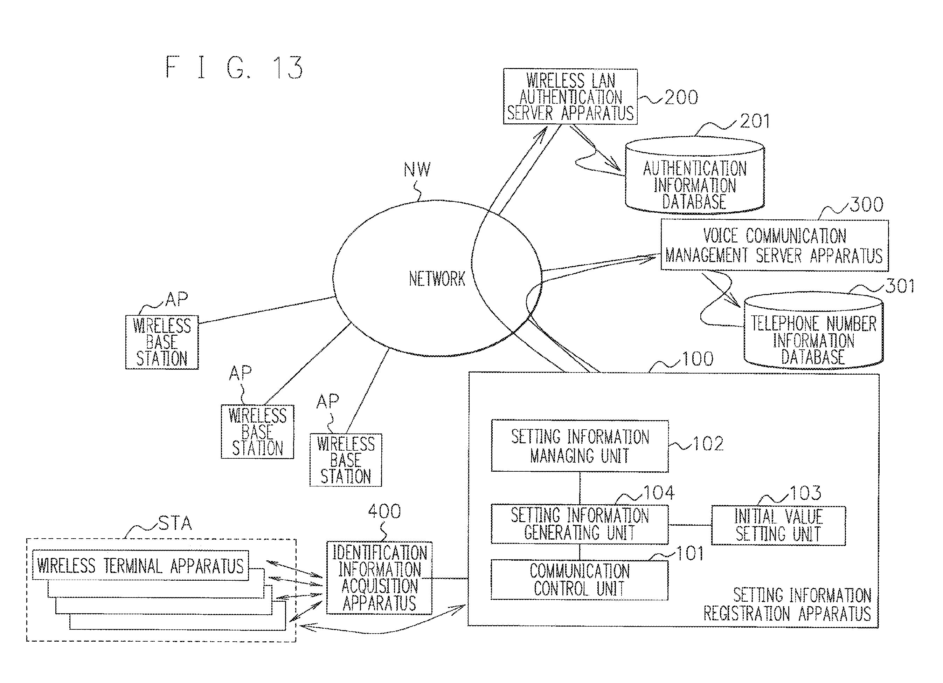

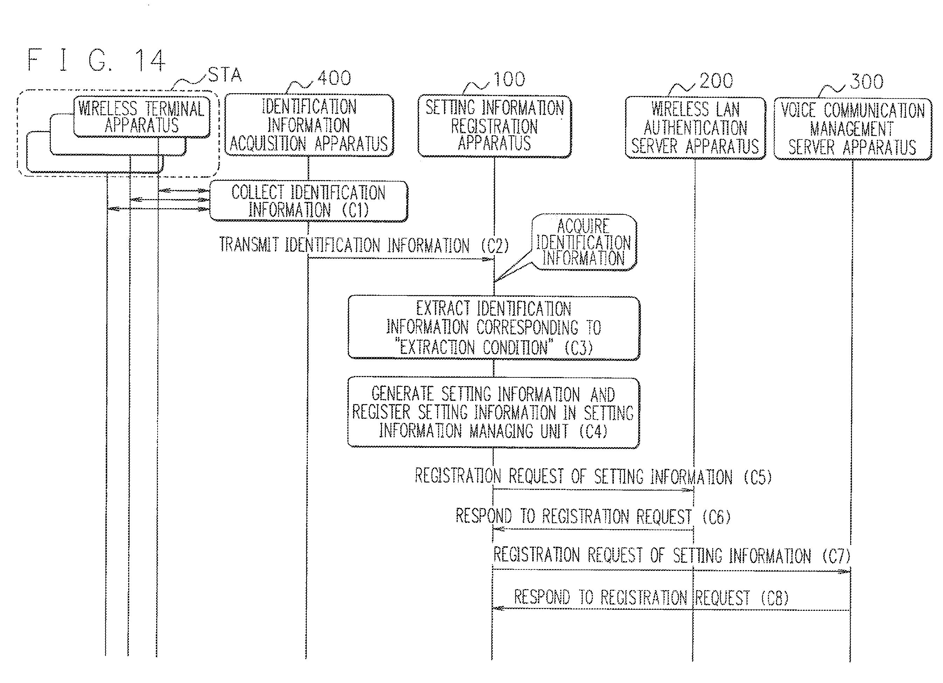

As a result, the setting information registration apparatus (100) can acquire the unique identification information of the wireless terminal apparatus (STA) using the identification information acquisition apparatus (400), and generate the unique setting information of the wireless terminal apparatus (STA) on the basis of the acquired identification information. Hereinafter, a wireless communication system according to the third exemplary embodiment will be described with reference to FIGS. 13 and 14.

### <System configuration of a wireless communication system>

First, the system configuration of the wireless communication system according to the third exemplary embodiment will be described with reference to Fig. 13.

As shown in Fig. 13, the wireless communication system according to the third exemplary embodiment is configured to include wireless terminal apparatuses (STA), wireless base stations (AP), an identification information acquisition apparatus (400), a setting information registration apparatus (100), a wireless LAN authentication server apparatus (200), an authentication information database (201), a voice communication management sever apparatus (300), and a telephone number information database (301).

The wireless communication system according to the third exemplary embodiment further includes the identification information acquisition apparatus (400) that acquires the unique identification information of the wireless terminal apparatus (STA).

The identification information acquisition apparatus (400) acquires the unique identification information of the wireless terminal apparatus (STA). Examples of the identification information acquisition apparatus (400) may include a barcode reader, a QR code reader, an OCR (Optical Character Recognition), an OMR (Optical Mark Recognition), and an RFID reader. Further, the identification information acquisition apparatus (400) may use any one of all apparatuses that can acquire the unique identification information of the wireless terminal apparatus (STA).

<A series of control operations in a wireless communication system>
Next, a series of control operations in the wireless communication system according to the third exemplary embodiment will be described with reference to Fig. 14.

First, the identification information acquisition apparatus (400) acquires the unique identification information of the wireless terminal apparatus (STA) or unique identification information of another apparatus other than the wireless terminal apparatus (STA), and arbitrarily collects unique identification information of an unspecific apparatus (Step C1).

Next, the identification information acquisition apparatus (400) transmits the arbitrarily collected unique identification information of the unspecific apparatus to the setting information registration apparatus (100) (Step C2). As a result, the setting information registration apparatus (100) can acquire the unique identification information of the unspecific apparatus.

Further, the transmission condition of when the identification information acquisition apparatus (400) transmits the identification information to the setting information registration apparatus (100) is not limited to the specific condition, and the identification information acquisition apparatus (400) may transmit the identification information to the setting information registration apparatus (100) using various conditions as triggers.

For example, when the identification information acquisition apparatus (400) receives an acquisition request of the identification information from the setting information registration apparatus (100), the identification information acquisition apparatus (400) transmits the identification information to the setting information registration apparatus (100). In addition, when it is determined in the identification information acquisition apparatus (400) that a specific time has passed, the identification information acquisition apparatus (400) transmits the identification information to the setting information registration apparatus (100). Further, when it is determined in the identification information acquisition apparatus (400) that the specific number of identification information is collected, the identification information acquisition apparatus (400) transmits the identification information to the setting information registration apparatus (100). Furthermore, when it is determined in the identification information acquisition apparatus (400) that the identification information is acquired, the identification information acquisition apparatus (400) sequentially transmits the identification information to the setting information registration apparatus (100).

Next, the setting information registration apparatus (100) extracts identification information corresponding to the "extraction condition" from the identification information acquired from the identification information acquisition apparatus (400), on the basis of the "extraction conditions" that are managed in the setting information managing unit (102) (Step C3).

As a result, the setting information registration apparatus (100) can extract the unique identification information of the wireless terminal apparatus (STA) that corresponds to the "extraction condition" managed in the setting information managing unit (102).

Next, the setting information registration apparatus (100) generates the unique setting information of the wireless terminal apparatus (STA), on the basis of the unique identification information of the wireless terminal apparatus (STA) that corresponds to the "extraction condition" managed in the setting information managing unit (102) and the "telephone number" that is set in the initial value setting unit (103). In addition, the setting information registration apparatus (100) registers the generated unique setting information of the wireless terminal apparatus (STA) in the setting information managing unit (102) (Step C4).

Further, the setting information registration apparatus (100) transmits the generated unique setting information of the wireless terminal apparatus (STA) to the wireless LAN authentication server apparatus (200), and requests to register the setting information (Step C5). On the basis of the setting information that is received from the setting information registration apparatus (100), the wireless LAN authentication server apparatus (200) registers authentication information needed at the time of a wireless communication connection process in the authentication information database (201), and responds to the registration request of the setting information (Step C6).

Further, the setting information registration apparatus (100) transmits the generated unique setting information of the wireless terminal apparatus (STA) to the voice communication management server apparatus 300, and requests to register the setting information (Step C7). The voice communication management server apparatus (300) registers telephone number information needed at the time of a voice communication connection process in the telephone number information database (301), on the basis of the setting information received from the setting information registration apparatus (100), and responds to the registration request of the setting information (Step C8).

As such, the identification information acquisition apparatus (400) arbitrarily collects the unique identification information of the unspecific apparatus, and transmits the arbitrarily collected identification information to the setting information registration apparatus (100). In addition, the setting information registration apparatus (100) extracts the unique identification information of the wireless terminal apparatus (STA) that corresponds to the extraction condition managed in the setting information managing unit (102), on the basis of the identification information acquired from the identification information acquisition apparatus (400) and the extraction condition managed in the setting information managing unit (102). The setting information registration apparatus (100) generates the unique setting information of the wireless terminal apparatus (STA), on the basis of the unique identification information of the extracted wireless terminal apparatus (STA).

In addition, the setting information registration apparatus (100) transmits the generated unique setting information of the wireless terminal apparatus (STA) to the wireless LAN authentication server apparatus (200) and the voice communication management server apparatus (300), and registers the setting information in the authentication information database (201) and the telephone number information database (301).

As a result, the setting information registration apparatus (100) can automatically register the setting information, which is needed when the wireless terminal apparatus (STA) performs wireless communication, in the authentication information database (201) and the telephone number information database (301). Further, the setting information registration apparatus (100) can extract the unique identification information of the specific wireless terminal apparatus (STA) from the arbitrarily collected identification information, thereby preventing unnecessary setting information from being generated when the setting information is generated.

### (Fourth exemplary embodiment)

Next, the fourth exemplary embodiment will be described.

When changing the unique setting information of the wireless terminal apparatus (STA) that is generated on the basis of a "telephone number" set in the initial value setting unit (103), the wireless communication system according to the fourth exemplary embodiment uses the same "telephone number" to change the setting information.

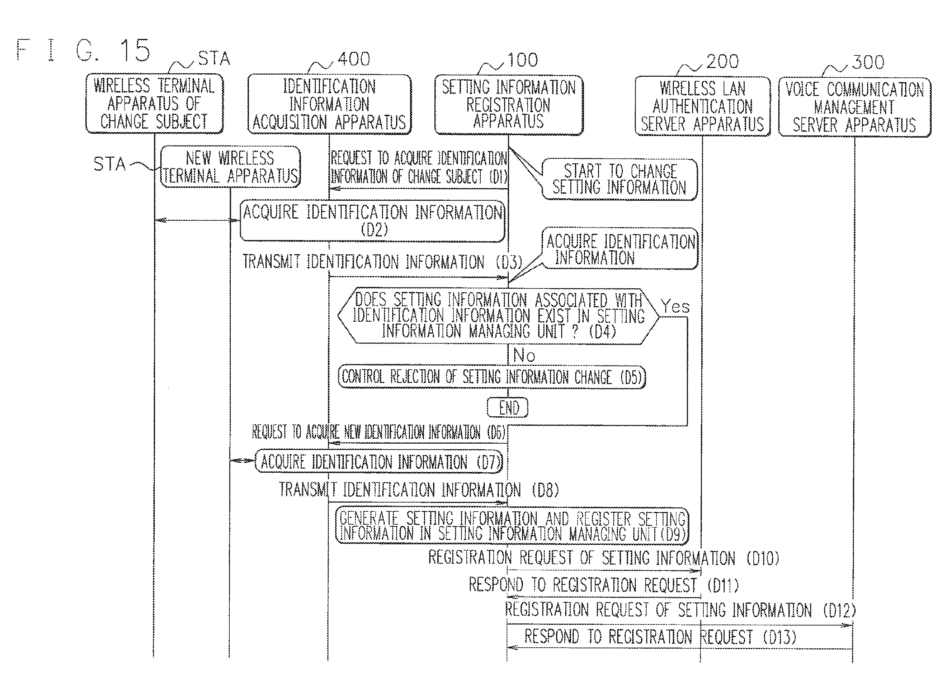

As a result, the wireless communication system can change the setting information without changing the "telephone number" that a possessor of the wireless terminal apparatus (STA) has acquired. Hereinafter, the wireless communication system according to the fourth exemplary embodiment will be described with reference to Fig. 15.

### <System configuration of a wireless communication system>

The wireless communication system according to the fourth exemplary embodiment has substantially the same configuration as the wireless communication system according to the third exemplary embodiment shown in Fig. 13.

<A series of control operations in a wireless communication system>
Next, a series of control operations in the wireless communication system according to this embodiment will be described with reference to Fig. 15.

First, a manager uses the operation unit of the setting information registration apparatus (100) to perform a setting information changing operation. As a result, the setting information registration apparatus (100) starts to change the setting information. The setting information registration apparatus (100) transmits the acquisition request of the unique identification information of the wireless terminal apparatus (STA) that becomes a change subject to the identification information acquisition apparatus (400) (Step D1).

When receiving the acquisition request of the identification information from the setting information registration apparatus (100), the identification information acquisition apparatus (400) performs a control operation such that the unique identification information of the wireless terminal apparatus (STA) that becomes the change subject is acquired (Step D2). In addition, the identification information acquisition apparatus (400) transmits the unique identification information of the wireless terminal apparatus (STA), which is acquired from the wireless terminal apparatus (STA) and becomes the change subject, to the setting information registration apparatus (100) (Step D3).

The setting information registration apparatus (100) receives the unique identification information of the wireless terminal apparatus (STA) as the change subject from the identification information acquisition apparatus (400), searches the setting information managed in the setting information managing unit (102), on the basis of the received unique identification information of the wireless terminal apparatus (STA) as the change subject, and determines whether there is the setting information that is associated with the unique identification information of the wireless terminal apparatus (STA) received from the identification information acquisition apparatus (400) and managed in the setting information managing unit (102) (Step D4).

When it is determined that there is no setting information that is associated with the unique identification information of the wireless terminal apparatus (STA) received from the identification information acquisition apparatus (400) and managed in the setting information managing unit (102) (Step D4/No), the setting information registration apparatus (100) performs rejection control of the setting information change, and completes the process (Step D5).

Further, as the reject control of the setting information change, for example, the rejection notification of the setting information change indicating that the setting information cannot be changed may be displayed on the display unit of the setting information registration apparatus (100), or may be transmitted to the side of the identification information acquisition apparatus (400).

When it is determined that there is the setting information that is associated with the unique identification information of the wireless terminal apparatus (STA) received from the identification information acquisition apparatus (400) and managed in the setting information managing unit (102) (Step D4/Yes), the setting information registration apparatus (100) transmits an acquisition request of unique identification information of a new wireless terminal apparatus (STA) to the identification information acquisition apparatus (400) (Step D6).

When receiving the acquisition request of the identification information from the setting information registration apparatus (100), the identification information acquisition apparatus (400) performs a control operation such that the unique identification information of the new wireless terminal apparatus (STA) is acquired (Step D7). In addition, the identification information acquisition apparatus (400) transmits the unique identification information of the new wireless terminal apparatus (STA), which is acquired from the wireless terminal apparatus (STA), to the setting information registration apparatus (100) (Step D8).

The setting information registration apparatus (100) receives the unique identification information of the new wireless terminal apparatus (STA) from the identification information acquisition apparatus (400), generates unique setting information of the new wireless terminal apparatus (STA) on the basis of the received unique identification information of the new wireless terminal apparatus (STA), registers the generated unique setting information of the new wireless terminal apparatus (STA) in the setting information managing unit (102), and updates the unique setting information of the wireless terminal apparatus (STA) as the change subject (Step D9).

At this time, the setting information registration apparatus (100) generates the unique setting information of the new wireless terminal apparatus (STA), on the basis of the telephone number included in the setting information that is used by the wireless terminal apparatus (STA) as the change subject and the unique identification information of the new wireless terminal apparatus (STA) that is received from the identification information acquisition apparatus (400).

As a result, since the setting information registration apparatus (100) can reutilize the telephone number that is included in the setting information used by the wireless terminal apparatus (STA) as the change subject and generate the unique setting information of the new wireless terminal apparatus (STA), the setting information registration apparatus (100) can generate the unique setting information of the new wireless terminal apparatus (STA) without changing the telephone number.

Further, the setting information registration apparatus (100) does not reutilize a password that is included in the setting information used by the wireless terminal apparatus (STA) as the change subject, and performs a control operation such that a new password is generated. As a result, even though the wireless terminal apparatus (STA) as the change subject attempts to have access to the wireless LAN authentication server apparatus (200) using the setting information, the password that is included in the setting information registered in the authentication information database (201) is changed. Accordingly, the wireless terminal apparatus (STA) as the change subject cannot be connected to the wireless LAN authentication server apparatus (200).

Next, the setting information registration apparatus (100) transmits the generated unique setting information of the new wireless terminal apparatus (STA) to the wireless LAN authentication server apparatus (200), and requests to register the setting information (Step D10). The wireless LAN authentication server apparatus (200) registers the setting information needed at the time of a wireless communication connection process in the authentication information database (201), on the basis of the setting information received from the setting information registration apparatus (100), and responds to the registration request of the setting information (Step D11).

At this time, on the basis of the user ID that is included in the setting information received from the setting information registration apparatus (100), the wireless LAN authentication server apparatus (200) searches the authentication information database (201), and acquires from the authentication information database (201) authentication information including the same user ID as the user ID that is included in the setting information received from the setting information registration apparatus (100).

As a result, the wireless LAN authentication server apparatus (200) can acquire authentication information related to the wireless terminal apparatus (STA) as the change subject from the authentication information database (201). In addition, the wireless LAN authentication server apparatus (200) updates the authentication information related to the new wireless terminal apparatus (STA) in the authentication information database (201).

Further, the setting information registration apparatus (100) transmits the generated unique setting information of the new wireless terminal apparatus (STA) to the voice communication management server apparatus (300), and requests to register the setting information (Step D12). The voice communication management server apparatus (300) registers the telephone number information needed at the time of the voice communication connection process in the telephone number information database (301), on the basis of the setting information received from the setting information registration apparatus (100), and responds to the setting information registration request (Step D13).

At this time, on the basis of the telephone number that is included in the setting information received from the setting information registration apparatus (100), the voice communication management server apparatus (300) searches the telephone number information database (301), and acquires from the telephone number information database (301) telephone number information including the same telephone number as the telephone number that is included in the setting information received from the setting information registration apparatus (100).

As a result, the voice communication management server apparatus (300) can acquire telephone number information related to the wireless terminal apparatus (STA) as the change subject from the telephone number information database (301). In addition, the voice communication management server apparatus (300) updates the telephone number information related to the new wireless terminal apparatus (STA) in the telephone number information database (301).

As such, the setting information registration apparatus (100) generates the unique setting information of the new wireless terminal apparatus (STA), on the basis of the telephone number that is included in the setting information used by the wireless terminal apparatus (STA) as the change subject and the unique identification information of the new wireless terminal apparatus (STA). As a result, since the setting information registration apparatus (100) can reutilize the telephone number that is included in the setting information used by the wireless terminal apparatus (STA) as the change subject and generate the unique setting information of the new wireless terminal apparatus (STA), the setting information registration apparatus (100) can generate the unique setting information of the new wireless terminal apparatus (STA) without changing the telephone number. Accordingly, it is possible to effectively use the telephone numbers.

Further, the embodiments are the preferred embodiments of the present invention, but a range of the present invention is not limited to the embodiments. That is, various changes and modifications can be made by those skilled in the art without departing from the spirit and scope of the present invention.

For example, in the wireless communication systems according to the embodiments, the determination conditions of when the wireless terminal apparatus (STA) uses a setting dedicated SSID (Service Set Identifier) to be connected to the setting information registration apparatus (100) through the wireless base station (AP) are not limited to the determination conditions described in the embodiments. The wireless terminal apparatus (STA) may use a setting dedicated SSID (Service Set Identifier) to be connected to the setting information registration apparatus (100) through the wireless base station (AP), while using various conditions as triggers.

Further, when a plurality of wireless control apparatuses that include the wireless LAN authentication server apparatus (200) and the voice communication management server apparatus (300) exist, the ranges of telephone numbers that are set in the initial value setting unit (103) are divisionally managed for every wireless control apparatus, such that the ranges of the telephone numbers used for the individual wireless control apparatuses are different from each other.

For example, the telephone numbers: 3000 to 3099 that are set in the initial value setting unit (103) may be controlled to be used when the setting information is registered in the first wireless control apparatus and the telephone numbers: 3100 to 3199 may be controlled to be used when the setting information is registered in the second wireless control apparatus, such that the ranges of telephone numbers used for the individual wireless control apparatuses are different from each other.

Further, the control operations in the control apparatuses, such as the wireless base station (AP), the wireless terminal apparatus (STA), the setting information registration apparatus (100), and the identification information acquisition apparatus (400), which configure the wireless communication system according to the embodiment, can be executed by hardware, software, or a combination thereof.

Further, when a process using software is executed, a program where a process sequence is included can be installed in a memory that is incorporated in dedicated hardware of a computer and executed, or the program can be installed in a general-purpose computer where various processes can be executed and executed by the computer.

For example, the program can be recorded in advance in a hard disk or a ROM (Read Only Memory) as a recording medium. Alternatively, the program can be temporarily or permanently stored (recorded) in a removable recording medium, such as a floppy disk (registered trademark), a CD-ROM (Compact Disc Read Only Memory), an MO (Magneto Optical) disk, a DVD (Digital Versatile Disk), a magnetic disk, and a semiconductor memory.

The removable recording medium can be provided as so-called package software.

Further, in addition to the method where the program is installed in the computer from the removable recording medium, the program can be transmitted from the download site to the computer through wireless communication, or transmitted to the computer through wired communication using a network, such as a LAN (Local Area Network) and the Internet, and the computer can receive the transmitted program and the program can be installed in the recording medium, such as the incorporated hard disk.

Further, the processes may be executed in a time-series type in accordance with the process operations described in the embodiments, executed in consideration of the processing capabilities of apparatuses that execute the processes, or executed in parallel or individually, if necessary.

Furthermore, in the wireless communication systems that are described in the embodiments, individual functions of a plurality of apparatuses may be mixed by constructing the logical set configuration of the plurality of apparatuses.

From the description of the embodiment, this embodiment has the following characteristics.

A setting information registration apparatus according to this embodiment is a setting information registration apparatus that registers setting information, which is needed when a wireless apparatus performs wireless communication, in a wireless control apparatus that controls wireless communication of the wireless apparatus. The setting information registration apparatus includes an identification information collecting unit that arbitrarily collects unique identification information of unspecific apparatuses; an identification information extracting unit that extracts unique identification information of a specific wireless apparatus from the identification information arbitrarily collected by the identification information collecting unit; and a setting information registering unit that generates the setting information on the basis of the identification information extracted by the identification information extracting unit, and registers the generated setting information in the wireless control apparatus.

Further, the setting information registration apparatus according to this embodiment includes an extraction condition managing unit that manages extraction conditions used to specify the unique identification information of the specific wireless apparatus. The identification information extracting unit extracts identification information corresponding to the extraction conditions from the identification information arbitrarily collected by the identification information collecting unit, and extracts the unique identification information of the specific wireless apparatus.

Further, the setting information registration apparatus according to this embodiment includes an extraction condition setting unit that sets the extraction conditions.

Further, in the setting information registration apparatus according to this embodiment, the extraction condition setting unit acquires the extraction conditions from a communication apparatus that is connected to the setting information registration apparatus, and sets the acquired extraction conditions.

Further, the setting information registration apparatus according to this embodiment includes a telephone number managing unit that manages telephone numbers. The setting information registering unit generates the setting information, on the basis of the identification information extracted by the identification information extracting unit and the telephone numbers managed in the telephone number managing unit.

Further, in the setting information registration apparatus according to this embodiment, the setting information registering unit selects an arbitrary telephone number from the telephone numbers that are managed in the telephone number managing unit, and generates the setting information on the basis of the selected arbitrary telephone number and the identification information.

Further, the setting information registration apparatus according to this embodiment includes a selected telephone number managing unit that manages information of the telephone number arbitrarily selected from the telephone numbers managed in the telephone number managing unit. The setting information registering unit selects a telephone number other than the telephone number selected from the telephone numbers managed in the telephone number managing unit, on the basis of the information managed in the selected telephone number managing unit, and generates the setting information on the basis of the selected telephone number and the identification information.

Further, the setting information registration apparatus according to this embodiment includes a deleting unit that deletes the information managed in the selected telephone number managing unit.

Further, the setting information registration apparatus according to this embodiment includes a change request receiving unit that receives a change request of the setting information; and a new identification information acquiring unit that acquires unique identification information of a new wireless apparatus, when the change request is received. The setting information registering unit generates the setting information on the basis of the identification information acquired by the new identification information acquiring unit, and registers the generated setting information in the wireless control apparatus.

Further, the setting information registration apparatus according to this embodiment includes a setting information managing unit that manages the identification information extracted by the identification information extracting unit and the setting information by associating the identification information and the setting information with each other; and a change identification information acquiring unit that acquires unique identification information of a wireless apparatus as a change subject, when the change request is received. The new identification information acquiring unit acquires the unique identification information of the new wireless apparatus, when the identification information acquired by the change identification information acquiring unit corresponds to the identification information managed in the setting information managing unit.

Further, in the setting information registration apparatus according to this embodiment, the wireless control apparatus is a control apparatus that controls at least one of a wireless authentication apparatus to determine whether or not to approve wireless communication of the wireless apparatus and a voice communication management apparatus to determine whether or not to approve voice communication of the wireless apparatus. The authentication information registering unit registers the setting information with respect to the control apparatus that controls the at least one of the wireless authentication apparatus and the voice communication management apparatus.

Further, the setting information registration apparatus according to this embodiment includes a password generating unit that generates a password used when determining whether or not to approve wireless connection between the wireless apparatus and the wireless authentication apparatus; and a user ID generating unit that generates a user ID used when the wireless apparatus receives an authentication permission from the wireless authentication apparatus. The setting information registering unit registers the setting information including the password and the user ID in the wireless authentication apparatus.

Further, a wireless communication system according to this embodiment is a wireless communication system that includes a wireless apparatus; a wireless control apparatus that controls wireless communication of the wireless apparatus; and a setting information registration apparatus that registers setting information, which is needed when the wireless apparatus performs wireless communication, in the wireless control apparatus. The setting information registration apparatus includes an identification information collecting unit that arbitrarily collects unique identification information of unspecific apparatuses, an identification information extracting unit that extracts unique identification information of a specific wireless apparatus from the identification information arbitrarily collected by the identification information collecting unit, and a setting information registering unit that generates the setting information on the basis of the identification information extracted by the identification information extracting unit, and registers the generated setting information in the wireless control apparatus.

Further, in the wireless communication system according to this embodiment, the setting information registration apparatus includes an extraction condition managing unit that manages extraction conditions used to specify the unique identification information of the specific wireless apparatus. The identification information extracting unit extracts identification information corresponding to the extraction conditions from the identification information arbitrarily collected by the identification information collecting unit, and extracts the unique identification information of the specific wireless apparatus.

Further, in the wireless communication system according to this embodiment, the setting information registration apparatus includes an extraction condition setting unit that sets the extraction conditions.

Further, in the wireless communication system according to this embodiment, the extraction condition setting unit acquires the extraction conditions from a communication apparatus that is connected to the setting information registration apparatus, and sets the acquired extraction conditions.

Further, in the wireless communication system according to this embodiment, the setting information registration apparatus includes a telephone number managing unit that manages telephone numbers. The setting information registering unit generates the setting information on the basis of the identification information extracted by the identification information extracting unit and the telephone numbers managed in the telephone number managing unit.

Further, in the wireless communication system according to this embodiment, the setting information registering unit selects an arbitrary telephone number from the telephone numbers that are managed in the telephone number managing unit, and generates the setting information on the basis of the selected arbitrary telephone number and the identification information.

Further, in the wireless communication system according to this embodiment, the setting information registration apparatus includes a selected telephone number managing unit that manages information of the telephone number arbitrarily selected from the telephone numbers managed in the telephone number managing unit. The setting information registering unit selects a telephone number other than the telephone number selected from the telephone numbers managed in the telephone number managing unit, on the basis of the information managed in the selected telephone number managing unit, and generates the setting information on the basis of the selected telephone number and the identification information.

Further, in the wireless communication system according to this embodiment, the setting information registration apparatus includes a deleting unit that deletes the information managed in the selected telephone number managing unit.

Further, in the wireless communication system according to this embodiment, the setting information registration apparatus includes a change request receiving unit that receives a change request of the setting information; and a new identification information acquiring unit that acquires unique identification information of a new wireless apparatus, when the change request is received. The setting information registering unit generates the setting information on the basis of the identification information acquired by the new identification information acquiring unit, and registers the generated setting information in the wireless control apparatus.

Further, in the wireless communication system according to this embodiment, the setting information registration apparatus includes a setting information managing unit that manages the identification information extracted by the identification information extracting unit and the setting information by associating the identification information and the setting information with each other; and a change identification information acquiring unit that acquires unique identification information of a wireless apparatus as a change subject, when the change request is received. The new identification information acquiring unit acquires the unique identification information of the new wireless apparatus, when the identification information acquired by the change identification information acquiring unit corresponds to the identification information managed by the setting information managing unit.

Further, in the wireless communication system according to this embodiment, the wireless control apparatus is a control apparatus that controls at least one of a wireless authentication apparatus to determine whether or not to approve wireless communication of the wireless apparatus and a voice communication management apparatus to determine whether or not to approve voice communication of the wireless apparatus. The authentication information registering unit registers the setting information with respect to the control apparatus that controls the at least one of the wireless authentication apparatus and the voice communication management apparatus.

Further, in the wireless communication system according to this embodiment, the setting information registration apparatus includes a password generating unit that generates a password used when determining whether or not to approve wireless connection between the wireless apparatus and the wireless authentication apparatus; and a user ID generating unit that generates a user ID used when the wireless apparatus receives an authentication permission from the wireless authentication apparatus. The setting information registering unit registers the setting information including the password and the user ID in the wireless authentication apparatus.

Further, a setting information registration method according to this embodiment is a setting information registration method that is executed by a setting information registration apparatus that registers setting information, which is needed when a wireless apparatus performs wireless communication, in a wireless control apparatus that controls wireless communication of the wireless apparatus. The setting information registration apparatus executes an identification information collecting process of arbitrarily collecting unique identification information of unspecific apparatuses; an identification information extracting process of extracting unique identification information of a specific wireless apparatus from the identification information arbitrarily collected by the identification information collecting process; and a setting information registering process of generating the setting information on the basis of the identification information extracted by the identification information extracting process and registering the generated setting information in the wireless control apparatus.

Further, in the setting information registration method according to this embodiment, the setting information registration apparatus includes an extraction condition managing unit that manages extraction conditions used to specify the unique identification information of the specific wireless apparatus. The identification information extracting process extracts identification information corresponding to the extraction conditions from the identification information arbitrarily collected by the identification information collecting process, and extracts the unique identification information of the specific wireless apparatus.

Further, a setting information registration program according to this embodiment is a setting information registration program that is executed in a setting information registration apparatus that registers setting information, which is needed when a wireless apparatus performs wireless communication, in a wireless control apparatus that controls wireless communication of the wireless apparatus. The setting information registration program allows to be executed in the setting information registration apparatus the following processes: an identification information collecting process of arbitrarily collecting unique identification information of unspecific apparatuses; an identification information extracting process of extracting unique identification information of a specific wireless apparatus from the identification information arbitrarily collected by the identification information collecting process; and a setting information registering process of generating the setting information on the basis of the identification information extracted by the identification information extracting process and registering the generated setting information in the wireless control apparatus.

Further, in the setting information registration program according to this embodiment, the setting information registration apparatus includes an extraction condition managing unit that manages extraction conditions used to specify the unique identification information of the specific wireless apparatus. The identification information extracting process extracts identification information corresponding to the extraction conditions from the identification information arbitrarily collected by the identification information collecting process, and extracts the unique identification information of the specific wireless apparatus.

This application is based upon and claims the benefit of priority from Japanese patent application No. 2006-213744, filed on August 4, 2006, the disclosure of which is incorporated herein in its entirety by reference.

### Industrial Applicability

The setting information registration apparatus, the wireless communication system, the setting information registration method, and the setting information registration program according to the present invention can be applied to when the unique setting information of the wireless terminal apparatus is automatically generated, and in particular, are suitably used when setting information needed at the time of performing wireless communication is automatically generated, at the time of starting to operate the wireless communication.

### Brief Description of the Drawings

Fig. 1 is a diagram illustrating the system configuration of a wireless communication system that is associated with the present invention;
Fig. 2 is a diagram illustrating an example of the system configuration of a wireless communication system according to this embodiment;
Fig. 3 is a diagram illustrating an example of the internal configuration of a wireless terminal apparatus (STA) that configures a wireless communication system according to this embodiment;
Fig. 4 is a diagram illustrating an example of the table configuration of a setting information management table (17) in a wireless terminal apparatus (STA);
Fig. 5 is a diagram illustrating an example of the internal configuration of a wireless base station (AP) that configures a wireless communication, system according to this embodiment;
Fig. 6 is a diagram illustrating an example of the table configuration of when setting information is managed in a setting information managing unit (102) in a setting information registration apparatus (100) that configures a wireless communication system according to a first exemplary embodiment;
Fig. 7 is a sequence chart illustrating the control operation in a wireless communication system according to a first exemplary embodiment;
Fig. 8 is a sequence chart illustrating the control operation in a wireless communication system according to a second exemplary embodiment;
Fig. 9 is a diagram illustrating an example of the table configuration of when setting information is managed in a setting information managing unit (102) in a setting information registration apparatus (100) that configures a wireless communication system according to a second exemplary embodiment;
Fig. 10 is a sequence chart illustrating another control operation in a wireless communication system according to a second exemplary embodiment;
Fig. 11 is a diagram illustrating a display example of when a registration situation of setting information that is managed by a setting information management table (17) is displayed on a display unit (14);
Fig. 12 is a diagram illustrating an example of the table configuration of a setting information management table (17) in a wireless terminal apparatus (STA);
Fig. 13 is a diagram illustrating an example of the system configuration of a wireless communication system according to a third exemplary embodiment;
Fig. 14 is a sequence chart illustrating the control operation in a wireless communication system according to a third exemplary embodiment; and
Fig. 15 is a sequence chart illustrating the control operation in a wireless communication system according to a fourth exemplary embodiment.

### Description of Reference Numerals

- STA: WIRELESS TERMINAL APPARATUS
- AP: WIRELESS BASE STATION
- NW: NETWORK
- 11, 21: COMMUNICATION UNIT
- 12, 22: CONTROL UNIT
- 13, 23: STORAGE UNIT
- 14: DISPLAY UNIT
- 15: OPERATION UNIT
- 16, 24: ANTENNA
- 17: SETTING INFORMATION MANAGEMENT TABLE
- 100: SETTING INFORMATION REGISTRATION APPARATUS
- 101: COMMUNICATION CONTROL UNIT
- 102: SETTING INFORMATION MANAGING UNIT
- 103: INITIAL VALUE SETTING UNIT
- 104: SETTING INFORMATION GENERATING UNIT
- 200: WIRELESS LAN AUTHENTICATION SERVER APPARATUS
- 201: AUTHENTICATION INFORMATION DATABASE
- 300: VOICE COMMUNICATION MANAGEMENT SERVER APPARATUS
- 301: TELEPHONE NUMBER INFORMATION DATABASE
- 400: IDENTIFICATION INFORMATION ACQUISITION APPARATUS

## Claims

1. A setting information registration apparatus that registers setting information, which is needed when a wireless apparatus performs wireless communication, in a wireless control apparatus that controls wireless communication of the wireless apparatus, the setting information registration apparatus comprising:
identification information collecting means for arbitrarily collecting unique identification information of unspecific apparatuses;
identification information extracting means for extracting unique identification information of a specific wireless apparatus from the identification information arbitrarily collected by the identification information collecting means; and
setting information registering means for generating the setting information on the basis of the identification information extracted by the identification information extracting means, and registering the generated setting information in the wireless control apparatus.

2. The setting information registration apparatus according to claim 1, further comprising:
extraction condition managing means for managing extraction conditions used to specify the unique identification information of the specific wireless apparatus,
wherein the identification information extracting means extracts identification information corresponding to the extraction conditions from the identification information arbitrarily collected by the identification information collecting means, and extracts the unique identification information of the specific wireless apparatus.

3. The setting information registration apparatus according to claim 2, further comprising:
extraction condition setting means for setting the extraction conditions.

4. The setting information registration apparatus according to claim 3,
wherein the extraction condition setting means acquires the extraction conditions from a communication apparatus that is connected to the setting information registration apparatus, and sets the acquired extraction conditions.

5. The setting information registration apparatus according to claim 1, further comprising:
telephone number managing means for managing telephone numbers,
wherein the setting information registering means generates the setting information, on the basis of the identification information extracted by the identification information extracting means and the telephone numbers managed in the telephone number managing means.

6. The setting information registration apparatus according to claim 5,
wherein the setting information registering means selects an arbitrary telephone number from the telephone numbers that are managed in the telephone number managing means, and generates the setting information on the basis of the selected arbitrary telephone number and the identification information.

7. The setting information registration apparatus according to claim 6, further comprising:
selected telephone number managing means for managing information of the telephone number arbitrarily selected from the telephone numbers managed in the telephone number managing means,
wherein the setting information registering means selects a telephone number other than the telephone number previously selected from the telephone numbers managed in the telephone number managing means, on the basis of the information managed in the selected telephone number managing means, and generates the setting information on the basis of the selected telephone number and the identification information.

8. The setting information registration apparatus according to claim 7, further comprising:
deleting means for deleting the information managed in the selected telephone number managing means.

9. The setting information registration apparatus according to claim 1, further comprising:
change request receiving means for receiving a change request of the setting information; and
new identification information acquiring means for acquiring unique identification information of a new wireless apparatus, when the change request is received,
wherein the setting information registering means generates the setting information on the basis of the identification information acquired by the new identification information acquiring means, and registers the generated setting information in the wireless control apparatus.

10. The setting information registration apparatus according to claim 9, further comprising:
setting information managing means for managing the identification information extracted by the identification information extracting means and the setting information by associating the identification information and the setting information with each other; and
change identification information acquiring means for acquiring unique identification information of a wireless apparatus as a change subject, when the change request is received,
wherein the new identification information acquiring means acquires the unique identification information of the new wireless apparatus, when the identification information acquired by the change identification information acquiring means corresponds to the identification information managed in the setting information managing means.

11. The setting information registration apparatus according to claim 1,
wherein the wireless control apparatus is a control apparatus that is at least one of a wireless authentication apparatus to determine whether or not to approve wireless communication of the wireless apparatus and a voice communication management apparatus to determine whether or not to approve voice communication of the wireless apparatus, and
the authentication information registering means registers the setting information with respect to the control apparatus that is at least one of the wireless authentication apparatus and the voice communication management apparatus.

12. The setting information registration apparatus according to claim 11, further comprising:
password generating means for generating a password used when determining whether or not to approve wireless connection between the wireless apparatus and the wireless authentication apparatus; and
user ID generating means for generating a user ID used when the wireless apparatus receives an authentication permission from the wireless authentication apparatus,
wherein the setting information registering means registers the setting information including the password and the user ID in the wireless authentication apparatus.

13. A wireless communication system, comprising:
a wireless apparatus;
a wireless control apparatus that controls wireless communication of the wireless apparatus; and
a setting information registration apparatus that registers setting information, which is needed when the wireless apparatus performs wireless communication, in the wireless control apparatus,
wherein the setting information registration apparatus includes
identification information collecting means for arbitrarily collecting unique identification information of unspecific apparatuses,
identification information extracting means for extracting unique identification information of a specific wireless apparatus from the identification information arbitrarily collected by the identification information collecting means, and
setting information registering means for generating the setting information on the basis of the identification information extracted by the identification information extracting means, and registering the generated setting information in the wireless control apparatus.

14. The wireless communication system according to claim 13,
wherein the setting information registration apparatus includes extraction condition managing means for managing extraction conditions used to specify the unique identification information of the specific wireless apparatus, and
the identification information extracting means extracts identification information corresponding to the extraction conditions from the identification information arbitrarily collected by the identification information collecting means, and extracts the unique identification information of the specific wireless apparatus.

15. The wireless communication system according to claim 14,
wherein the setting information registration apparatus includes extraction condition setting means for setting the extraction conditions.

16. The wireless communication system according to claim 15,
wherein the extraction condition setting means acquires the extraction conditions from a communication apparatus that is connected to the setting information registration apparatus, and sets the acquired extraction conditions.

17. The wireless communication system according to claim 13,
wherein the setting information registration apparatus includes telephone number managing means for managing telephone numbers, and
the setting information registering means generates the setting information on the basis of the identification information extracted by the identification information extracting means and the telephone numbers managed in the telephone number managing means.

18. The wireless communication system according to claim 17,
wherein the setting information registering means selects an arbitrary telephone number from the telephone numbers that are managed in the telephone number managing means, and generates the setting information on the basis of the selected arbitrary telephone number and the identification information.

19. The wireless communication system according to claim 18,
wherein the setting information registration apparatus includes selected telephone number managing means for managing information of the telephone number arbitrarily selected from the telephone numbers managed in the telephone number managing means, and
the setting information registering means selects a telephone number other than the telephone number previously selected from the telephone numbers managed in the telephone number managing means, on the basis of the information managed in the selected telephone number managing means, and generates the setting information on the basis of the selected telephone number and the identification information.

20. The wireless communication system according to claim 19,
wherein the setting information registration apparatus includes deleting means for deleting the information managed in the selected telephone number managing means.

21. The wireless communication system according to claim 13,
wherein the setting information registration apparatus includes
change request receiving means for receiving a change request of the setting information; and
new identification information acquiring means for acquiring unique identification information of a new wireless apparatus, when the change request is received, and
the setting information registering means generates the setting information on the basis of the identification information acquired by the new identification information acquiring means, and registers the generated setting information in the wireless control apparatus.

22. The wireless communication system according to claim 21,
wherein the setting information registration apparatus includes
setting information managing means for managing the identification information extracted by the identification information extracting means and the setting information by associating the identification information and the setting information with each other; and
change identification information acquiring means for acquiring unique identification information of a wireless apparatus as a change subject, when the change request is received, and
the new identification information acquiring means acquires the unique identification information of the new wireless apparatus, when the identification information acquired by the change identification information acquiring means corresponds to the identification information managed by the setting information managing means.

23. The wireless communication system according to claim 13,
wherein the wireless control apparatus is a control apparatus that is at least one of a wireless authentication apparatus to determine whether or not to approve wireless communication of the wireless apparatus and a voice communication management apparatus to determine whether or not to approve voice communication of the wireless apparatus, and
the authentication information registering means registers the setting information with respect to the control apparatus that is at least one of the wireless authentication apparatus and the voice communication management apparatus.

24. The wireless communication system according to claim 23,
wherein the setting information registration apparatus includes password generating means for generating a password used when determining whether or not to approve wireless connection between the wireless apparatus and the wireless authentication apparatus; and
user ID generating means for generating a user ID used when the wireless apparatus receives an authentication permission from the wireless authentication apparatus, and
the setting information registering means registers the setting information including the password and the user ID in the wireless authentication apparatus.

25. A setting information registration method that is executed by a setting information registration apparatus that registers setting information, which is needed when a wireless apparatus performs wireless communication, in a wireless control apparatus that controls wireless communication of the wireless apparatus, the setting information registration apparatus executing:
an identification information collecting process of arbitrarily collecting unique identification information of unspecific apparatuses;
an identification information extracting process of extracting unique identification information of a specific wireless apparatus from the identification information arbitrarily collected by the identification information collecting process; and
a setting information registering process of generating the setting information on the basis of the identification information extracted by the identification information extracting process and registering the generated setting information in the wireless control apparatus.

26. The setting information registration method according to claim 25,
wherein the setting information registration apparatus includes extraction condition managing means for managing extraction conditions used to specify the unique identification information of the specific wireless apparatus, and
the identification information extracting process extracts identification information corresponding to the extraction conditions from the identification information arbitrarily collected by the identification information collecting process, and extracts the unique identification information of the specific wireless apparatus.

27. A setting information registration program that is executed in a setting information registration apparatus that registers setting information, which is needed when a wireless apparatus performs wireless communication, in a wireless control apparatus that controls wireless communication of the wireless apparatus, the setting information registration program allowing to be executed in the setting information registration apparatus the executing:
an identification information collecting process of arbitrarily collecting unique identification information of unspecific apparatuses;
an identification information extracting process of extracting unique identification information of a specific wireless apparatus from the identification information arbitrarily collected by the identification information collecting process; and
a setting information registering process of generating the setting information on the basis of the identification information extracted by the identification information extracting process and registering the generated setting information in the wireless control apparatus.

28. The setting information registration program according to claim 27,
wherein the setting information registration apparatus includes extraction condition managing means for managing extraction conditions used to specify the unique identification information of the specific wireless apparatus, and
the identification information extracting process extracts identification information corresponding to the extraction conditions from the identification information arbitrarily collected by the identification information collecting process, and extracts the unique identification information of the specific wireless apparatus.
